(19) **Europäisches Patentamt**
**European Patent Office**
**Office européen des brevets**

(11) **EP 3 736 148 A1**

(12) **EUROPEAN PATENT APPLICATION**

(43) Date of publication:
**11.11.2020 Bulletin 2020/46**

(51) Int Cl.:
**B60H 1/00** (2006.01)      **B60H 1/32** (2006.01)
**F25B 47/02** (2006.01)

(21) Application number: **20168036.0**

(22) Date of filing: **03.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.05.2019   KR 20190053989**

(71) Applicant: **LG Electronics Inc.**
**07336 SEOUL (KR)**

(72) Inventors:
• **CHOI, Inho**
  **08592 Seoul (KR)**
• **LEE, Jooseong**
  **08592 Seoul (KR)**
• **KIM, Kyunghwan**
  **08592 Seoul (KR)**

(74) Representative: **Ter Meer Steinmeister & Partner**
**Patentanwälte mbB**
**Nymphenburger Straße 4**
**80335 München (DE)**

(54) **HEAT PUMP SYSTEM FOR ELECTRIC VEHICLE AND CONTROL METHOD THEREOF**

(57)     A heat pump system (1) for an electric vehicle including an outdoor fan (46) configured to blow air to an outdoor heat exchanger (45), a coolant temperature sensor (350) installed at a coolant line and configured to detect a temperature of a coolant circulating in a power train module (10) or a battery (20), an outdoor heat exchange sensor (370) installed on one side of the outdoor heat exchanger (45) and configured to detect an outdoor heat exchanger outlet pressure defined as a pressure of a refrigerant passing through the outdoor heat exchanger (45), and a compressor inlet sensor (360) installed on an intake side of a compressor (100) and configured to detect a compressor inlet temperature defined as a temperature of the refrigerant flowing into the compressor (100). Whether frost sticking occurs may be determined based on information detected by the coolant temperature sensor (350), the outdoor heat exchange sensor (370), and the compressor inlet sensor (360).

Fig.1

## Description

## BACKGROUND

### Field of the Invention

The present disclosure relates to a heat pump system for an electric vehicle and a control method thereof.

### Discussion of the Related Art

An electric vehicle is defined as a vehicle that obtains driving energy of an automobile from electrical energy, not from combustion of fossil fuel.

In general, the electric vehicle may include a battery, a driving motor, a reducer, an inverter, a converter, an onboard charger (OBD), and the like. The electric vehicle may generate driving power by supplying electric energy from the battery to the driving motor. Therefore, the electric vehicle may increase a driving distance per charge as power consumption of the battery is reduced.

The electric vehicle may include a heat pump system for the efficient use of electrical energy and for cooling or heating a room (or indoor area). Such a heat pump system for an electric vehicle may include a compressor, a flow path switching valve, an outdoor heat exchanger, an indoor heat exchanger, and an expansion valve.

In a cooling mode, in the heat pump system for an electric vehicle, a highpressure gaseous refrigerant compressed in the compressor may be condensed through the outdoor heat exchanger and then evaporated in the indoor heat exchanger through the expansion valve. Thus, the room may be cooled.

In a heating mode, in the heat pump system for an electric vehicle, the highpressure gaseous refrigerant compressed by the compressor may be heat-exchanged with ambient air by a blowing force of an indoor fan, while passing through the indoor heat exchanger. Here, the heat-exchanged refrigerant may be condensed and the ambient air absorb heat to have an increased temperature.

The ambient air increased in temperature is blown by the indoor fan so as to be discharged to the room. Thus, the room may be heated. Meanwhile, the condensed refrigerant may be evaporated in the outdoor heat exchanger through the expansion valve and then collected to the compressor.

Meanwhile, when an evaporation temperature of the refrigerant flowing in the pipe of the outdoor heat exchanger in the heating mode is maintained at 0°C or lower, frost occurs in condensed water of humid air existing on a surface of the outdoor heat exchanger and is stuck to the surface. This phenomenon is defined as frost sticking.

If the frost sticking is ongoing, heat exchange is hindered to degrade heating performance, and if the frost sticking is continuously maintained, thermal comfort of a room is lowered and reliability of the compressor due to wet compression may be deteriorated. In order to prevent this, the heat pump system for an electric vehicle of the related art may be operated in a defrost mode. Therefore, it is very important to determine whether frost sticking occurs to proceed with the defrost mode.

However, the heat pump system for an electric vehicle of the related art has the following problems.

First, the heat pump system for an electric vehicle cannot provide an effective and reliable frost sticking factor. As a result, it is difficult to accurately determine frost sticking and to proceed with the efficient defrost mode.

Second, in the defrost mode, the indoor heat exchanger operates as an evaporator and a heating cycle of the refrigerant is switched to a cooling cycle, and here, the defrost mode is frequently entered to increase defrost energy, thereby increasing power consumption of the battery.

Third, if a precise and accurate frost sticking determination factor is not provided, freezing may remain on a surface of the outdoor heat exchanger due to incomplete defrosting or frost sticking may be accelerated by pooled condensed water at the time of switching to the heating cycle to aggravate degradation of heating performance.

Fourth, since entry of the defrost mode is determined by comparing a temperature and a pressure with set values without considering a heat pump operation time, the defrost mode may be entered by a cause other than frost sticking. That is, heating and defrosting cycles are performed inefficiently.

Fifth, the inefficient defrost mode relatively increases battery power consumption and energy consumption.

Sixth, the defrost mode is conducted without considering driving characteristics of the electric vehicle in which ignition is frequently turned on and off. In this case, the defrost mode is determined according to a previously set logic without consideration based on defrost stop, which significantly degrades defrost efficiency.

Seventh, there is no method for preventing a phenomenon of dew condensation of an indoor glass window ("flash fogging") due to a rapid increase in relative humidity of a room in the process of switching back to the heating mode after the completion of defrosting. This resultantly disturbs a driver's vision and adversely affects driving safety.

Eighth, a configuration of the heat pump system is complicated. In this case, the number and size of components are increased so that the components may be difficult to apply to a limited installation space of the electric vehicle.

Ninth, a method of appropriately and flexibly utilizing a surrounding environment of the electric vehicle according to various operation modes of the heat pump system or required loads is insufficient. In this case, it is difficult to expect to improve performance of a cycle by ensuring appropriate supercooling in the cooling or heating mode, and as a result, power of the battery is excessively consumed.

Related art document information is as follows.

(Patent Document 1) KR1020130014535 A, entitled heat pump system and control method thereof
(Patent Document 2) KR1020150098167 A, entitled method for defrosting heat exchanger of car air conditioning system

## SUMMARY

An aspect of the present disclosure is directed to providing a heat pump system for an electric vehicle and a control method thereof which may solve the above problems.

In particular, another aspect of the present disclosure is directed to providing a heat pump system for an electric vehicle and a control method thereof, which increases efficiency of defrosting by using a precise and accurate frost sticking determination factor.

Another aspect of the present disclosure is directed to providing a heat pump system for an electric vehicle and a control method thereof, which may perform defrosting on a heat exchanger by determining whether frost sticking occurs in consideration of characteristics of an electric vehicle in which ignition is frequently turned on and off.

Another aspect of the present disclosure is directed to providing a heat pump system for an electric vehicle and a control method thereof, which may improve heat exchange between a refrigerant and frost in a defrost mode.

Another aspect of the present disclosure is directed to providing a heat pump system for an electric vehicle and a control method thereof, which may improve safety of an electric vehicle during driving in the process of switching between a defrost mode and a heating mode.

Another aspect of the present disclosure is directed to providing a heat pump system for an electric vehicle which may implement various operation modes for indoor air conditioning using a single auxiliary heat exchanger, and a control method thereof.

Another aspect of the present disclosure is directed to providing a heat pump system for an electric vehicle, which includes an auxiliary heat exchanger integrating functions of an accumulator and a supercooling heat exchanger to suit a narrow installation space of an electric vehicle and having a compact structure, and a control method thereof.

Another aspect of the present disclosure is directed to providing a heat pump system for an electric vehicle, which may improve thermal comfort of an indoor occupant and reduce power consumption of a battery, and a control method thereof.

Another aspect of the present disclosure is directed to providing a heat pump system for an electric vehicle, which may utilize waste heat generated in a coolant cycle of an electric vehicle, such as a power train, an on board charger, a battery, in a refrigerant cycle, and a control method thereof.

Another aspect of the present disclosure is directed to providing a heat pump system for an electric vehicle, which may increase a driving distance per charge, and a control method thereof.

To achieve these and other advantages and in accordance with the purpose of the disclosure, as embodied and broadly described herein, there is provided a heat pump system for an electric vehicle, which may determine whether a condition of a waste heat recovery mode in which a power train chiller or a battery cooler, rather than an outdoor heat exchanger, is used as an evaporator is satisfied before whether frost sticking occurs on the outdoor heat exchanger in a heating mode is determined. The heat pump system may include a controller configured to perform a method according to any one of the herein described embodiments. In particular, the controller may be configured to control the operation of the heat pump system and its components.

In addition, a heating mode operation time may be excluded from the condition for determining whether frost sticking occurs if there is a record of operation stop due to the start-off (OFF) of the electric vehicle during an operation in a defrost mode.

In addition, in order to determine whether frost sticking occurs, a continuous operation time of the heating mode, an outdoor temperature, a compressor inlet temperature, an outdoor heat exchanger outlet pressure, and a duration time may be used as determination factors.

In addition, the outdoor heat exchanger outlet pressure may be measured every predetermined time. Also, an average pressure may be calculated when the outdoor heat exchanger outlet pressure measured at every preset time is generated a predetermined number of times.

In addition, a variation of the outdoor heat exchanger outlet pressure may be calculated based on the calculated average pressure and the outdoor heat exchanger outlet pressure measured after and a predetermined continuous operation time of the heating mode has elapsed. The calculated variation of the outdoor heat exchanger outlet pressure may be used as a determination factor for determining whether frost sticking occurs. Accordingly, whether frost sticking occurs may be determined directly, immediately, and accurately.

In addition, when the defrost mode is performed, an outdoor fan may be turned off. Accordingly, convective heat transfer which causes heat loss may be prevented.

In addition, when switching to the heating mode after the defrost mode is terminated, flash fogging may be controlled to be prevented by applying a drive delay time to actuation of the compressor.

In addition, termination of the defrost mode may be determined based on a condensation temperature of the refrigerant passing through the outdoor heat exchanger and a predetermined defrost mode maximum operation time.

Specifically, the heat pump system for an electric vehicle according to an embodiment of the present disclosure may include: a coolant line through which a coolant circulates to a power train module and a battery, and a refrigerant line through which a refrigerant circulates to an indoor expansion valve expanding a refrigerant flowing into a compressor, an indoor heat exchanger, an outdoor heat exchanger, and the indoor heat exchanger and to an outdoor expansion valve expanding a refrigerant flowing into the outdoor heat exchanger.

In addition, the heat pump system may further include: an outdoor fan configured to blow air to the outdoor heat exchanger, a coolant temperature sensor installed at the coolant line and configured to detect a temperature of the coolant circulating in the power train module or the battery, an outdoor heat exchange sensor installed on one side of the outdoor heat exchanger and configured to detect an outdoor heat exchanger outlet pressure defined as a pressure of the refrigerant passing through the outdoor heat exchanger, and a compressor inlet sensor installed on an intake side of the compressor and configured to detect a compressor inlet temperature defined as a temperature of the refrigerant flowing into the compressor.

In addition, the heat pump system may further include: a controller configured to determine whether frosting occurs to operate in a defrost mode based on information detected by the coolant temperature sensor, the outdoor heat exchange sensor, and the compressor inlet sensor.

In addition, the controller may determine whether frosting occurs based on the compressor inlet temperature and the outdoor heat exchanger outlet pressure as determination factors.

In addition, the heat pump system may further include: an indoor controller configured to input a user setting temperature, an outdoor temperature sensor configured to detect an outdoor temperature, and an indoor temperature sensor configured to detect an indoor temperature.

In addition, the heat pump system may further include: an insolation sensor configured to measure an insolation incident on an inside of the electric vehicle, and a pyroelectric infrared sensor (PIR) configured to detect occupancy.

In addition, the controller may calculate a target temperature defined as a temperature of air discharged to a room based on the user setting temperature, the outdoor temperature, the indoor temperature, the insolation, and the occupancy.

In addition, the controller may determine an operation mode in which an indoor temperature reaches the user setting temperature based on the calculated target temperature and the outdoor temperature.

In addition, the heat pump system may further include: a power train chiller provided to allow the coolant line through which the coolant circulates to the power train module and the refrigerant line at which the outdoor expansion valve is installed to be heat-exchanged.

In addition, the controller may close the outdoor expansion valve and control an operation in a waste heat recovery mode in which the power train chiller operates as an evaporator when a temperature of the coolant is higher than a coolant reference temperature defined as a time point at which a viscous force of the coolant is rapidly changed.

In addition, the controller may control the operation in a heating mode in which the outdoor heat exchanger operates as an evaporator when the temperature of the coolant is lower than the coolant reference temperature.

In addition, the heat pump system for an electric vehicle may further include a memory configured to store a precious operation record, and a timer configured to detect an operation time of the heating mode and the defrost mode.

In addition, the controller may determine whether the defrost mode is performed at an immediately previous operation termination time point from the memory.

In addition, the controller may omit heating mode operation time information detected from the timer when the defrost mode is performed at the immediately previous operation termination time point.

In another aspect of the present disclosure, there is provided a method of controlling a heat pump system for an electric vehicle, e.g. by a controller of a heat pump system according to any one of the herein described embodiments, including: comparing a temperature of a coolant with a coolant reference temperature defined as a time point at which a viscous force of the coolant is rapidly changed to determining a waste collection condition, determining whether an operation is stopped to determine whether a defrost mode is stopped in an immediately previous operation of the electric vehicle, detecting a continuous operation time of a heating mode, detecting an outdoor temperature, and measuring a first indicator and a second indicator for determining whether frosting occurs on the outdoor heat exchanger based on the continuous operation time and the outdoor temperature.

In addition, whether frosting occurs on the outdoor heat exchanger may not be determined when the waste heat collection condition is satisfied.

In addition, the heat pump system may be operated in a waste heat recovery mode in which heat generated by an electric component of the electric vehicle is used as a heat source of refrigerant evaporation when the temperature of the coolant is higher than the coolant reference temperature.

In addition, the heat pump system may be operated in a general heating mode in which ambient air is used as a heat source of refrigerant evaporation when the temperature of the coolant is lower than the coolant reference temperature.

In addition, the determining of whether the operation is stopped may include omitting detection of the continuous operation time when the operation is stopped. That is, the process of determining may be omitted by comparing the continuous operation time detected in the process of determining whether frost sticking occurs with a predetermined operation time.

In addition, the method may further include: determining whether the measured first indicator and the measured second indicator satisfy each basic condition, determining whether a duration time of at least one indicator satisfying the basic condition, among the first indicator and the second indicator, satisfies a duration time condition, and determining that frosting occurs and performing a defrost mode operation when the duration time of the indicator satisfies the duration time condition.

In addition, the first indicator may include a compressor inlet temperature defined as a temperature of a refrigerant intaken to a compressor.

In addition, the basic condition of the first indicator may include a minimum continuous operation time condition of the heating mode, an outdoor temperature condition, and a condition of the compressor inlet temperature corresponding to the outdoor temperature condition.

In addition, the minimum continuous operation time condition of the heating mode may include: a first operation time for avoiding an overshoot of initial actuation, and a second operation time for correcting the outdoor temperature condition and the condition of the compressor inlet temperature corresponding to the outdoor temperature condition, the second operation time arriving after the lapse of the first operation time.

In addition, the second indicator may include an outdoor heat exchanger outlet pressure defined as a pressure of a refrigerant passing through the outdoor heat exchanger.

In addition, the basic condition of the second indicator may include a minimum continuous operation time condition of the heating mode, an outdoor temperature condition, and an outdoor heat exchanger outlet pressure condition corresponding to the outdoor temperature condition.

In addition, the outdoor heat exchanger outlet pressure condition may be defined as whether the measured second indicator is a pressure greater than 70 kPa.

In addition, the second indicator may be defined as an outlet pressure variation ($\Delta Pc$) of the outdoor heat exchanger.

In addition, the outlet pressure variation ($\Delta Pc$) of the outdoor heat exchanger may be defined as a difference between an average value ($Pcavg$) regarding a pressure of the refrigerant passing through the outdoor heat exchanger and a pressure ($Pc$) of the refrigerant passing through the outdoor heat exchanger after the lapse of a predetermined operation time.

In addition, the performing of the defrost mode operation may include: controlling to increase revolution per minute (RPM) of the compressor in stages, a first valve control process of controlling a four-way valve to switch a flow direction of the refrigerant, closing the outdoor expansion valve, and controlling opening of the indoor expansion valve in stages, and turning off an outdoor fan positioned on one side of the outdoor heat exchanger.

In addition, the method may further include: measuring a condensation temperature of the refrigerant passing through the outdoor heat exchanger, determining whether the measured condensation temperature satisfies a defrosting termination condition, and switching to a heating operation when the defrosting termination condition is satisfied.

In addition, the defrosting termination condition may be defined as whether the condensation temperature satisfies a temperature higher than a predetermined temperature.

In addition, the performing of the defrost mode operation may include: a heating operation switching process to operate again in the heating mode when a defrosting termination condition defined based on a condensation temperature of the refrigerant is satisfied.

In addition, the heating operation switching process may include: turning off a compressor, determining whether a fresh fogging condition defined based on an outdoor temperature is satisfied, determining a driving delay time in which an off state of the compressor is maintained when the fresh fogging condition is satisfied, and turning on the compressor when the driving delay time has elapsed.

According to the present disclosure, defrosting efficiency and heating performance may be improved.

In addition, since determination of whether frost sticking is accurate and accuracy of a defrost mode entry time is improved, battery power consumption may be reduced and energy may be saved.

In addition, an incomplete defrosting state that occurs when ignition of the electric vehicle is turned off during actuation of the defrost mode in a previous operation may be prevented from affecting heating performance when the ignition of the electric vehicle is turned on again. Therefore, heating performance and defrosting efficiency may be improved. As a result, reliability of the heat pump system for an electric vehicle may be improved.

In addition, since the frost sticking determination factors for entering the defrost mode are variously considered, the defrost mode may be performed by recognizing frost growth conditions that may occur in various environments. As a result, the accuracy of frost sticking determination and defrost mode entry may be improved.

In addition, a heat transfer effect between the refrigerant and frost may be improved through the outdoor fan control in the defrost mode. Accordingly, a defrosting time is faster and heat loss may be reduced.

In addition, since it is possible to prevent the flash fogging phenomenon that may occur when switching from the defrost mode to the heating mode, it is possible to reduce the risk of obstructing the driver's vision in the process of the defrost mode and heating mode and provide a safe driving.

In addition, since the single auxiliary heat exchanger can be commonly utilized in various operation modes of the heat pump system for an electric vehicle, i.e., cooling, battery cooling, heating, defrosting, dehumidification, waste heat recovery modes, the configuration of the heat pump system may be simplified and miniaturized.

In addition, it is possible to increase a driving distance per charge by minimizing battery power consumption and to improve comfort of an indoor occupant.

In addition, when an alternative refrigerant having a very low global warming indicator (GWP) such as carbon dioxide ($CO_2$) is applied to a vehicle due to international regulations on hydrogen fluorocarbon (HFC), the heat pump system employing the auxiliary heat exchanger according to an embodiment of the present disclosure may supplement the shortcomings of the alternative refrigerant whose pressure is too high in a high temperature environment, and thus, the heat pump system according to an embodiment of the present disclosure may be appropriate as a heat pump system of a future electric vehicle.

In addition, since supercooling of the refrigerant at the outlet side of the condenser is further increased by the auxiliary heat exchanger, a flash gas at the inlet side of the evaporator may be further reduced.

In addition, since various operation modes of the electric vehicle may be simply implemented by the common pipe, the auxiliary pipe, and the flow pipe, manufacturing cost may be lowered and economic efficiency may be enhanced.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 is a schematic diagram of a heat pump system for an electric vehicle according to an embodiment of the present disclosure.
FIG. 2 is a view showing a configuration of a heat pump system for an electric vehicle according to an embodiment of the present disclosure.
FIG. 3 is a view showing a configuration of an auxiliary heat exchanger according to an embodiment of the present disclosure.

FIG. 4 is a block diagram showing a control configuration of a heat pump system for an electric vehicle according to an embodiment of the present disclosure.
FIG. 5 is a view showing a flow of a working fluid in a heating mode of a heat pump system for an electric vehicle according to an embodiment of the present disclosure.
FIG. 6 is a view showing a flow of a working fluid in a defrost mode of a heat pump system for an electric vehicle according to an embodiment of the present disclosure.
FIG. 7 is a flowchart showing a control method for determining an operation mode of a heat pump system for an electric vehicle according to an embodiment of the present disclosure.
FIG. 8 is a flowchart showing a control method for entering a defrost mode from a heating mode according to an embodiment of the present disclosure.
FIG. 9 is a graph of refrigerant pressure of an outdoor heat exchanger over time showing measurement of a second indicator ∆Pc of FIG. 8.
FIG. 10 is a flowchart illustrating a control method for determining whether a basic condition of a first indicator according to an embodiment of the present disclosure is satisfied.
FIG. 11 is a flowchart illustrating a control method for determining whether a basic condition of a second indicator according to an embodiment of the present disclosure is satisfied.
FIG. 12 is a flowchart illustrating a method of controlling a defrost mode according to an embodiment of the present disclosure.
FIG. 13 is a flowchart specifically showing a heating operation switching step of FIG. 12.
FIG. 14 is an experimental graph showing a change in heating capacity due to frost sticking of a heat pump system for an electric vehicle according to an embodiment of the present disclosure.
FIG. 15 is an experimental graph showing a change in evaporator outlet pressure (Pevapout) due to frost sticking of a heat pump system for an electric vehicle according to an embodiment of the present disclosure.

## DETAILED DESCRIPTION OF THE DISCLOSURE

Reference will now be made in detail to the embodiments of the present disclosure, examples of which are illustrated in the accompanying drawings. Wherever possible, the same reference numbers will be used throughout the drawings to refer to the same or like parts.

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present disclosure. Each of these terminologies is not used to define an essence, order or sequence of a corresponding component but used merely to distinguish the corresponding component from other component(s).

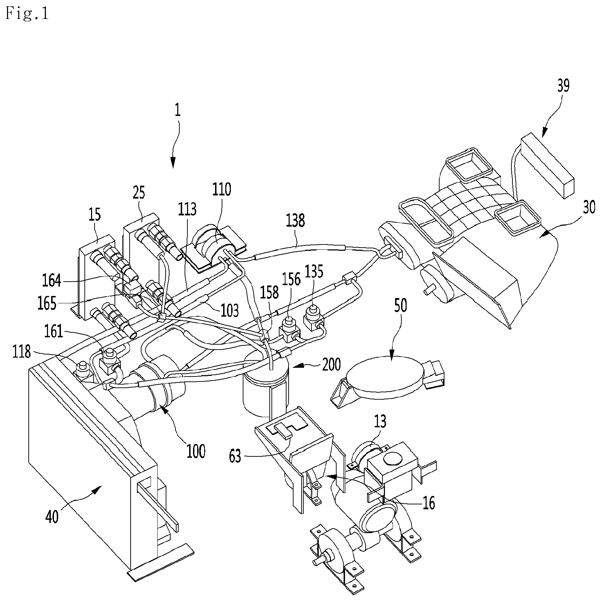

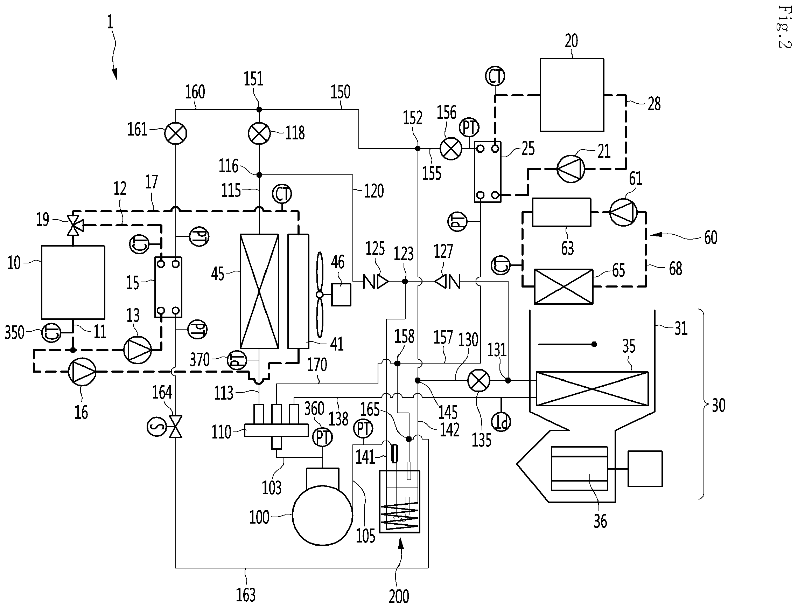

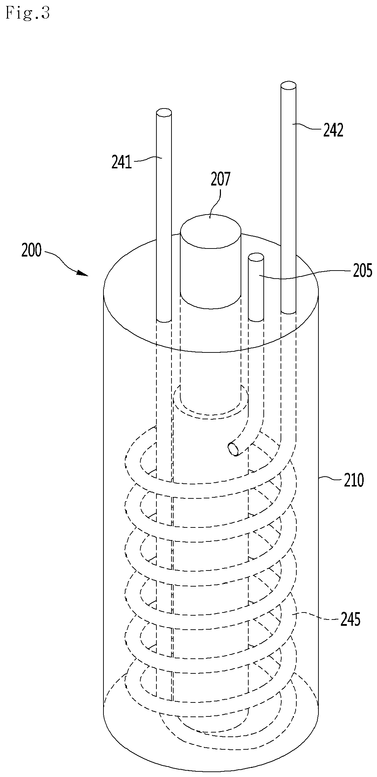

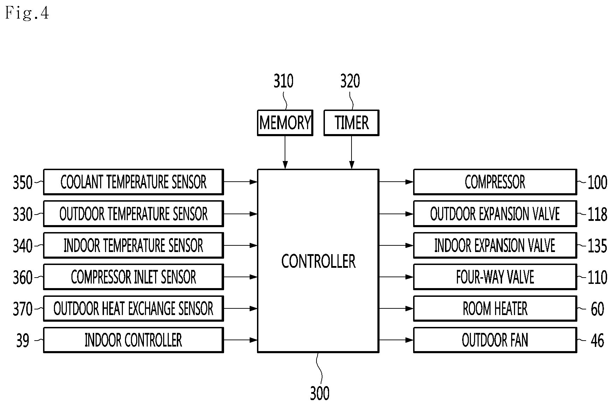

FIG. 1 is a schematic diagram of a heat pump system for an electric vehicle according to an embodiment of the present disclosure, FIG. 2 is a view showing a configuration of a heat pump system for an electric vehicle according to an embodiment of the present disclosure, FIG. 3 is a view showing a configuration of an auxiliary heat exchanger according to an embodiment of the present disclosure, and FIG. 4 is a block diagram showing a control configuration of a heat pump system for an electric vehicle according to an embodiment of the present disclosure.

Hereinafter, a heat pump system 1 for an electric vehicle according to an embodiment of the present disclosure is referred to as a "heat pump 1" for convenience of description.

Referring to FIGS. 1 to 4, the heat pump 1 according to an embodiment of the present disclosure may include a refrigerant line through which a refrigerant which is a primary fluid circulates and a coolant line through which a coolant which is a secondary fluid circulates. That is, the refrigerant and the coolant may be understood as working fluids of the heat pump 1.

The refrigerant may form a refrigerating cycle to provide cooling and heating to a room (or cabin). The coolant may be provided to a component that requires heat dissipation among electrical components of the electric vehicle.

That is, the coolant may perform a heat dissipation function to dissipate heat generated from a power train module 10 and a battery 20. For example, the coolant may be stored in a storage tank (not shown) provided in the electric vehicle. The coolant may be provided at each component that requires heat dissipation from the storage tank and may be recovered to the storage tank.

Meanwhile, the coolant provided to the power train module 10 to cool the power train module 10 may be referred to as a first coolant, and the coolant provided to the battery 20 to cool the battery 20 may be referred to as a second coolant.

The power train module 10 may include a drive motor generating a driving force of the electric vehicle and a reducer and an inverter connected to the drive motor.

The heat pump 1 may include a power train line 11 through which a coolant for cooling the power train module 10 circulates, a power train chiller 15 in which the coolant flowing through the power train line is heat-exchanged with a refrigerant, a chiller line 12 extending to allow to allow the coolant to circulate therethrough between the power train chiller 15 and the power train module 10, a power train pump 13 operating to provide the coolant to the chiller line 12, and a heat exchange module 40 installed on an outdoor side.

The power train line 11 may be provided to allow the coolant to pass therethrough to the power train module 10. That is, the power train line 11 may be understood as a pipe forming a coolant inlet and a coolant outlet of the power train module 10 to allow the coolant to circulate therethrough to the power train module 10.

That is, the power train line 11 may guide the coolant to circulate therethrough to the power train module 10.

The power train chiller 15 may allow a refrigerant expanded through a waste heat expansion valve 161 (to be described later) to be heat-exchanged with the high temperature coolant passing through the power train module 10.

The chiller line 12 may be connected to both sides of the power train line 11 penetrating through the power train module 10.

Specifically, the chiller line 12 connected to the power train line 11 located at an outlet of the power train module 10 may be coupled to a coolant inlet of the power train chiller 15. The chiller line 12 connected to the power train line 11 positioned at the inlet of the power train module 10 may be coupled to the coolant outlet of the power train chiller 15.

Therefore, the coolant absorbing heat, while passing through the power train module 10, may discharge heat, while passing through the power train chiller 15 through the chiller line 12.

The refrigerant passing through the power train chiller 15 may absorb heat of the coolant. That is, the refrigerant may use waste heat generated from the power train module 10 as a heat source. In first and second waste heat recovery heating modes (to be described later), the refrigerant may be evaporated using the waste heat as a heat source.

The chiller line 12 may be formed to extend from the power train line 11. That is, the chiller line 12 and the power train line 11 may be formed of an integral pipe. Therefore, the power train line 11 may include the chiller line 12.

In other words, the power train module 10 and the power train chiller 15 may be installed at the power train line 11 to circulate the coolant.

The power train pump 13 may be installed at the chiller line 12. For example, the power train pump 13 may be installed at the chiller line 12 connecting an outlet side of the power train module 10 and an inlet side of the power train chiller 15.

The power train pump 13 may operate so that the coolant passing through the power train module 10 flows into the chiller line 12. For example, when the power train pump 13 operates in an ON state, the coolant provided from the storage tank may circulate through the power train line 11 and the chiller line 12.

The outdoor heat exchange module 40 may include a radiator 41 releasing heat of coolant, an outdoor heat exchanger 45 exchanging heat with ambient air, and an outdoor fan 46 supplying air.

The coolant flowing through the power train line 11 may pass through the radiator 41. That is, the coolant flowing through the power train line 11 may pass through the radiator 41 and the power train chiller 15.

Specifically, the heat pump 1 may further include a radiator line 17 extending to allow the coolant to circulate between the radiator 41 and the power train module 10, a radiator pump 16 operating to provide the coolant to the radiator line 17, and a power train valve 19 limiting a flow of the coolant.

The radiator line 18 may be branched from one point of the power train line 11 and connected to the other point of the power train line 11 after passing through the radiator 41.

That is, the power train line 11 may form a branch point branched into the chiller line 12 and the radiator line 18 and form a junction point where the chiller line 12 and the radiator line 18 join. The branch point may be located at an outlet side of the power train module 10, and the junction point may be located at an inlet side of the power train module 10.

In addition, the power train valve 19 may be installed at the junction point. For example, the power train valve 19 may include a three-way valve. Therefore, the power train line 11, the chiller line 12, and the radiator line 17 may be connected to the power train valve 19.

The power train valve 19 may perform an opening and closing operation so that the coolant flowing through the chiller line 12 or the radiator line 17 is recovered to the power train line 11.

The radiator pump 16 may be installed at the radiator line 17. For example, the radiator pump 16 may be installed at the radiator line 17 connecting the outlet side of the power train module 10 and the inlet side of the radiator 41.

The radiator pump 16 may operate to allow the coolant passing through the power train module 10 to flow into the radiator line 17. For example, when the radiator pump 16 operates in an ON state, the coolant provided from the storage tank may circulate through the power train line 11 and the radiator line 17.

In view of the flow of the coolant, the radiator 41 may be installed at the radiator line 17. That is, the coolant may pass through the radiator 41 along the radiator line 17.

The radiator 41 may be located in front of the electric vehicle. Therefore, when the electric vehicle runs, cold air may enter the radiator 41 to cool the coolant absorbing the heat generated by the power train module 11.

The outdoor fan 46 may be located behind the radiator 41. Thus, the outdoor fan 46 may operate to prevent hot air from being stagnant behind the radiator 41.

The outdoor heat exchanger 45 may be located in front of the outdoor fan 46. The outdoor heat exchanger 45 may be located in front of or behind the radiator 41.

That is, the outdoor heat exchanger 45 may be located in front of the electric vehicle together with the radiator 41 to perform heat exchange between the ambient air and the refrigerant.

Meanwhile, the outdoor heat exchange module may be referred to as a condenser radiator fan module (CRFM).

The heat pump 1 may further include a battery line 28 through which the coolant for cooling the battery 20 circulates, a battery cooler 25 allowing the coolant flowing through the battery line 28 to exchange heat with the refrigerant, and a battery pump 21 operating to provide the coolant to the battery line 28.

The battery line 28 may extend so that the coolant circulates between the battery cooler 25 and the battery 20.

The battery pump 21 may be installed at the battery line 28.

The battery pump 21 may operate so that coolant circulates through the battery line 28 to perform heat dissipation of the battery 20. For example, when the battery pump 21 operates in an ON state, the coolant stored in the storage tank (not shown) may be provided to the battery line 28. The coolant may circulate through the battery line 28, while passing through the battery 20 and the battery cooler 25.

The battery cooler 25 may heat-exchange the refrigerant passing through a battery expansion valve 156 (to be described later) with the high temperature coolant passing through the battery 20.

The battery line 28 extends so that the outlet side of the battery 20 is connected to the coolant inlet of the battery cooler 25 and extends so that the coolant outlet of the battery cooler 25 is connected to the inlet side of the battery 20.

Therefore, the coolant absorbing heat through the battery 20 may be heat-exchanged with the refrigerant, while passing through the battery cooler 25 through the battery line 28, so as to be cooled.

The refrigerant passing through the battery cooler 25 may absorb heat of the coolant. That is, the refrigerant may use waste heat generated from the battery 20 as a heat source.

Therefore, although not shown in the drawings, in the first and second waste heat recovery heating modes (to be described later), the refrigerant using waste heat as a heat source may be evaporated not only through the power train chiller 15 but also the battery cooler 25 described above.

The heat pump 1 may further include an indoor heat exchange module 30 installed on the indoor side.

The indoor heat exchange module 30 may include an indoor duct 31 and an indoor heat exchanger 35 and an indoor fan 36 positioned inside the indoor duct 31.

The indoor fan 36 may provide air blowing. Therefore, the indoor fan 26 may discharge air into the interior of the electric vehicle or intake air in the room.

In addition, the indoor fan 36 may provide air bowing to heat-exchange the refrigerant passing through the indoor heat exchanger 35 with air.

The heat pump 1 may further include an indoor controller 39 that provides a user input unit.

The indoor controller 39 may be electrically connected to the indoor heat exchange module 30. For example, the indoor controller 39 may be connected to a control device (not shown) provided in the indoor heat exchanger module 30.

The user may input various operation modes of the heat pump 1 by operating the indoor controller 39.

For example, an operation mode selectable by the user among the operation modes of the heat pump 1 may be any one of cooling, heating, dehumidification, and ventilation. In addition, the control device may operate a specific operation mode that may implement optimal thermal efficiency based on the indoor temperature, outdoor temperature, coolant temperature, refrigerant temperature, refrigerant pressure, and the like.

Here, the specific operation mode may include general heating, single heat source waste heat recovery (first waste heat recovery), double heat source waste heat recovery (second waste heat recovery), dehumidification heating, defrost heating, and battery cooling.

Meanwhile, the heat pump 1 further comprises a compressor 100 compressing the refrigerant, a four-way valve 110 switching a flow direction of the refrigerant, and an auxiliary heat exchanger 200 performing heat exchange between the refrigerants.

The compressor 100 may intake a low temperature, low pressure refrigerant and compress the same into a high temperature, high pressure refrigerant.

A gaseous refrigerant compressed to have high temperature and high pressure may be discharged to a discharge port of the compressor 100. In addition, a low temperature, low pressure gaseous refrigerant may be intaken into an intake port of the compressor 100.

The discharge port of the compressor 100 may be coupled to a discharge pipe 103. The discharge pipe 103 may extend to the four-way valve 110.

The auxiliary heat exchanger 200 may guide heat exchange between the condensation refrigerant passing through the condenser and the evaporative refrigerant passing through the evaporator. The evaporative refrigerant is a relatively low temperature, low pressure refrigerant, the condensation refrigerant is a relatively high temperature, high pressure refrigerant.

Accordingly, the condensation refrigerant may be sub-cooled. That is, the auxiliary heat exchanger 200 may perform a sub-cooling function.

In addition, the auxiliary heat exchanger 200 may perform an accumulator function to separate the evaporative refrigerant flowing thereto into a gaseous refrigerant and a liquid refrigerant and allow the gaseous refrigerant to flow into the compressor 100. The liquid refrigerant in the evaporative refrigerant having a relatively low temperature may be further evaporated through heat exchange with the condensation refrigerant. Therefore, the amount of gaseous refrigerant intaken into the compressor 100 may be relatively increased.

In the heat pump system provided in the electric vehicle, a heat transfer area of the indoor heat exchanger may be relatively small. Therefore, the auxiliary heat exchanger 200 may be utilized as a kind of a buffer space (receiver tank) function of the liquid refrigerant.

Meanwhile, the auxiliary heat exchanger 200 may be referred to as "accumulator integrated internal heat exchanger." A detailed configuration of the auxiliary heat exchanger 200 will be described later.

The intake port of the compressor 100 may be coupled to the intake pipe 103. The intake pipe 103 may extend to the auxiliary heat exchanger 200 so that the gaseous refrigerant flows into the compressor 100.

The four-way valve 110 may guide the refrigerant flowing from the discharge pipe 103 to selectively flow to the outdoor heat exchanger 45 or the indoor heat exchanger 35 operating as a condenser according to an operation mode.

Specifically, an outdoor connection pipe 113 extending to one side of the outdoor heat exchanger 45 and an indoor connection pipe 138 extending to one side of the indoor heat exchanger 35 may be coupled to the four-way valve 110.

In addition, the four-way valve 110 may guide the refrigerant to flow into the auxiliary heat exchanger 200. Specifically, an accumulation pipe 170 extending to the auxiliary heat exchanger 200 may be coupled to the four-way valve 110.

The accumulation pipe 170 may include a cooler junction point 158 coupled to the cooler recovery pipe 157 (to be described later) and a chiller junction point 165 coupled to the chiller recovery pipe 163 (to be described later).

That is, the cooler junction point 158 and the chiller junction point 165 may be understood as points at which the evaporative refrigerant joins the accumulation pipe 170 to flow to the auxiliary heat exchanger 200.

The cooler junction point 158 may guide the refrigerant evaporated, while passing through the battery cooler 25 to the auxiliary heat exchanger 200 through the accumulation pipe 170.

The chiller junction point 165 may guide the refrigerant evaporated, while passing through the power train chiller 15 to the auxiliary heat exchanger 200 through the accumulation pipe 170.

The heat pump 1 may include an outdoor pipe 115 extending from the other side of the outdoor heat exchanger 45 and an indoor pipe 130 extending from the other side of the indoor heat exchanger 35.

The outdoor heat exchanger 45 may be coupled to the outdoor connection pipe 113 and the outdoor pipe 115 on both sides to guide the refrigerant. That is, the outdoor pipe 115 and the outdoor connection pipe 113 may be coupled to a refrigerant outlet and a refrigerant inlet of the outdoor heat exchanger 45, respectively. For example, when the outdoor heat exchanger 45 operates as a condenser, the outdoor connection pipe 113 allows the compressed refrigerant to flow into the outdoor heat exchanger 45, and the refrigerant condensed in the outdoor heat exchanger 45 is discharged to the outdoor pipe 115.

The indoor heat exchanger 35 may be coupled to the indoor connection pipe 138 and the indoor pipe 130 on both sides to guide the refrigerant. That is, the indoor pipe 130 and the indoor connection pipe 138 may be coupled to a refrigerant outlet and a refrigerant inlet of the indoor heat exchanger 35, respectively. For example, when the indoor heat exchanger 35 operates as a condenser, the indoor connection pipe 138 allows the compressed refrigerant to flow into the indoor heat exchanger 35, and the refrigerant condensed in the indoor heat exchanger 35 is discharged to the indoor pipe 130.

The heat pump 1 may further include a flow pipe 120 branched from the outdoor pipe 115 and extending to the indoor pipe 130.

Specifically, the flow pipe 120 may extend from an outdoor branch point 116 formed at one point of the outdoor pipe 115 to an indoor branch point 131 formed at one point of the indoor pipe 130.

The outdoor branch point 116 may be understood as a point where the refrigerant of the outdoor pipe 115 is branched. The indoor branch point 131 may be understood as a point where the refrigerant of the indoor pipe 130 is branched.

In other words, the indoor pipe 130 is branched from the flow pipe 120 connected to the indoor heat exchanger 35 and extends to a second auxiliary pipe 142 connected to the auxiliary heat exchanger 200.

The flow pipe 120 may include a flow branch point 123 where the condensation refrigerant joins.

The flow branch point 123 may guide the refrigerant passing through the outdoor heat exchanger 45 or the indoor heat exchanger 35 operating as a condenser according to an operation mode to flow into the auxiliary heat exchanger 200. For example, the flow branch point 123 may be coupled to the auxiliary pipe 141 extending to the auxiliary heat exchanger 200.

The heat pump 1 may further include a first flow valve 125 and a second flow valve 127 controlling a refrigerant flow of the flow pipe 120.

The first flow valve 125 and the second flow valve 127 may be installed at the flow pipe 120.

The first flow valve 125 may be installed between the outdoor branch point 116 and the flow branch point 123. The first flow valve 125 may control the refrigerant flowing between the outdoor branch point 116 and the flow branch point 123.

The second flow valve 127 may be installed between the flow branch point 123 and the indoor branch point 131. The second flow valve 127 may control the refrigerant flowing between the flow branch point 123 and the indoor branch point 131.

The first flow valve 125 and the second flow valve 127 may operate to allow the refrigerant flowing through the flow pipe 120 to flow to the auxiliary heat exchanger 200 through the auxiliary pipe 141 from the flow branch point 123.

That is, the first flow valve 125 and the second flow valve 127 may control a flow direction of the refrigerant in the flow pipe 120.

Meanwhile, the first flow valve 125 and the second flow valve 127 may be referred to as a "flow valve" together.

The flow valves 125 and 127 may include a check valve, a solenoid valve, an electromagnetic valve, and the like.

For convenience of explanation and understanding, in the embodiment of the present disclosure, it is assumed that the flow valves 125 and 127 are provided as check valves allowing a flow of the refrigerant in only one direction.

The first flow valve 125 and the second flow valve 127 may be installed so that allowed flow directions of the refrigerant are the opposite to each other.

Specifically, the first flow valve 125 allows a flow of the refrigerant from the outdoor branch point 116 to the flow branch point 123. However, the first flow valve 125 blocks a flow of the refrigerant from the flow branch point 123 to the outdoor branch point 116.

In addition, the second flow valve 127 allows a flow of the refrigerant from the indoor branch point 131 toward the flow branch point 123. However, the second flow valve 127 blocks a flow of the refrigerant from the flow branch point 123 to the indoor branch point 131.

Accordingly, regardless of the outdoor heat exchanger 45 or the indoor heat exchanger 35 operating as a condenser according to the operation mode, the condensation refrigerant may flow into the first auxiliary pipe 141 and may be sub-cooled, while passing through the auxiliary heat exchanger 200.

The heat pump 1 may further include the first auxiliary pipe 141 branched from one point of the flow pipe 120 and extending to the auxiliary heat exchanger 200 and the second auxiliary pipe 142 extending from the auxiliary heat exchanger 200 toward the expansion valves 161, 118, 156, and 135.

The refrigerant flowing into the auxiliary heat exchanger 200 through the first auxiliary pipe 141 may be heat-exchanged at the auxiliary heat exchanger 200 and then discharged from the heat exchanger 200 through the second auxiliary pipe 142.

That is, the first auxiliary pipe 141 and the second auxiliary pipe 142 may be connected to each other. For example, the first auxiliary pipe 141 and the second auxiliary pipe 142 may form an integral pipe by an inlet pipe 241, a spiral pipe 245 and an outlet pipe 242 (to be described later) in the auxiliary heat exchanger 200.

The first auxiliary pipe 141 may extend from the flow branch point 123 to the auxiliary heat exchanger 200. Therefore, the first auxiliary pipe 141 may guide the condensation refrigerant passing through the condenser to flow into the auxiliary heat exchanger 200.

As described above, the condensation refrigerant may be heat-exchanged with the evaporative refrigerant in the auxiliary heat exchanger 200 so as to be subcooled. The sub-cooled refrigerant may be discharged from the auxiliary heat exchanger 200 through the second auxiliary pipe 142. That is, the second auxiliary pipe 142 may guide the refrigerant of the first auxiliary pipe 141 passing through the auxiliary heat exchanger 200.

The second auxiliary pipe 142 may extend from the auxiliary heat exchanger 200 to a common pipe 150 (to be described later).

In addition, the second auxiliary pipe 142 may include an auxiliary branch point 145 to which the indoor pipe 130 is coupled.

The auxiliary branch point 145 may be understood as a branch point where the refrigerant flowing through the second auxiliary pipe 142 is branched to the indoor pipe 130. That is, the indoor pipe 130 may be branched from the second auxiliary pipe 142 and extend to the indoor heat exchanger 35.

The heat pump 1 may further include the common pipe 150 connecting the second auxiliary pipe 142 and the outdoor pipe 115.

One end of the common pipe 150 is defined as a first connection point 151 and the other end of the common pipe 150 is defined as a second connection point 152.

The outdoor pipe 115 may be coupled to the first connection point 151. That is, one end of the outdoor pipe 115 is coupled to the outdoor heat exchanger 45 and the other end of the outdoor pipe 115 is coupled to the common pipe 150. Here, the outdoor branch point 116 may be located between the outdoor heat exchanger 45 and the common pipe 150.

In addition, the chiller pipe 160 may be coupled to the first connection point 151. That is, the first connection point 151 may be understood as a branch point where the refrigerant is branched.

In other words, the common pipe 150 may be branched to the outdoor pipe 115 and the chiller pipe 160 from the first connection point 151.

In other words, the chiller pipe 160 may be branched from the outdoor pipe 115 to extend to the power train chiller 15.

The second auxiliary pipe 142 may be coupled to the second connection point 152. That is, one end of the second auxiliary pipe 142 is coupled to the auxiliary heat exchanger 200 and the other end of the second auxiliary pipe 142 is coupled to the common pipe 150.

Here, the auxiliary branch point 145 may be located between the indoor heat exchanger 35 and the common pipe 150.

In addition, a cooler pipe 155 may be coupled to the second connection point 152. That is, the second connection point 152 may be understood as a branch point where the refrigerant is branched. In other words, the common pipe 150 may be branched from the second connection point 152 to the second auxiliary pipe 142 and the cooler pipe 155.

The heat pump 1 may further include an outdoor expansion valve 118 installed at the outdoor pipe 115 and an indoor expansion valve 135 installed at pipe 130 installed at the indoor pipe 130.

The outdoor expansion valve 118 and the indoor expansion valve 135 may include an electronic expansion valve (EEV).

The outdoor expansion valve 118 and the indoor expansion valve 135 may adjust a pressure and a flow rate of the refrigerant through opening control.

The outdoor expansion valve 118 may be located between the outdoor branch point 116 and the first connection point 151. Accordingly, the refrigerant flowing in the common pipe 150 in the heating mode may flow into the outdoor pipe 115 and be expanded at the outdoor expansion valve 118.

The indoor expansion valve 135 may be located between the auxiliary branch point 145 and the indoor branch point 131. Accordingly, the refrigerant flowing through the second auxiliary pipe 142 in the cooling mode may flow into the indoor pipe 130 and be expanded by the indoor expansion valve 135.

The heat pump 1 may further include a cooler pipe 155 and a cooler recovery pipe 157 guiding the refrigerant for heat exchange between the refrigerant and the coolant at the battery cooler 25.

The cooler pipe 155 may be branched from the common pipe 150 and extend to the battery cooler 25. Specifically, the cooler pipe 155 may extend from the second connection point 152 to a refrigerant inlet formed at one side of the battery cooler 25.

In other words, the common pipe 150 may be branched from the second connection point 152 to the second auxiliary pipe 142 and the cooler pipe 155.

The cooler recovery pipe 157 may extend from the battery cooler 25 to the accumulation pipe 170. Specifically, the cooler recovery pipe 157 may extend from a refrigerant outlet formed at the other side of the battery cooler 25 to the cooler junction point 158.

That is, the cooler pipe 155 and the cooler recovery pipe 157 may guide the refrigerant heat-exchanged with the coolant circulating through the battery line 28 at the battery cooler 25. For example, in the heating mode, the refrigerant flowing through the cooler pipe 155 flow into the refrigerant inlet of the battery cooler 25 through the cooler pipe 155 and absorb heat of the coolant flowing into the coolant inlet of the battery cooler 25. Accordingly, the refrigerant passing through the battery cooler 25 may be evaporated.

In addition, the refrigerant absorbing heat of the coolant may be discharged to the cooler recovery pipe 157 through the refrigerant outlet of the battery cooler 25. In addition, the coolant of the cooler recovery pipe 157 may flow from the cooler junction point 158 to the accumulation pipe 170 and flow into the auxiliary heat exchanger 200.

The heat pump 1 may further include the cooler expansion valve 156 installed at the cooler pipe 155.

The cooler expansion valve 156 may include an electronic expansion valve (EEV).

The cooler expansion valve 156 may adjust a pressure and a flow rate of the refrigerant flowing through the cooler pipe 155 through opening control. For example, when the cooler expansion valve 156 is closed in the heating mode, the refrigerant flowing through the second auxiliary pipe 142 may not be branched from the second connection point 152 to the common pipe 150 and the cooler pipe 155 but entirely flow to the common pipe 150.

The heat pump 1 may further include a chiller pipe 160 and a chiller recovery pipe 163 for guiding the refrigerant, a waste heat expansion valve 161 installed at the chiller pipe 160, and a chiller valve 164 installed at the chiller recovery pipe 163.

The chiller pipe 160 may be branched from the common pipe 150 and extend to the power train chiller 15. Specifically, the chiller pipe 160 may extend from the first connection point 151 to the refrigerant inlet formed at one side of the power train chiller 15.

In other words, the common pipe 150 may be branched to the chiller pipe 160 and the outdoor pipe 115 from the first connection point 151. That is, the chiller pipe 160 and the outdoor pipe 115 may be coupled one end of the common pipe 150 and the cooler pipe 155 and the second auxiliary pipe 142 are coupled to the other end of the common pipe 150.

The chiller recovery pipe 163 may extend from the power train chiller 15 to the accumulation pipe 170. Specifically, the chiller recovery pipe 163 may extend from a refrigerant outlet formed at the other side of the power train chiller 15 to the chiller junction point 165.

That is, the chiller pipe 160 and the chiller recovery pipe 163 may guide the refrigerant heat-exchanged with the coolant circulating through the chiller line 12 at the power train chiller 15.

For example, in the heating mode, the refrigerant flowing through the common pipe 150 may flow into the refrigerant inlet of the power train chiller 15 through the chiller pipe 160 and absorb heat of the coolant flowing into the cooling inlet of the power train chiller 15. Accordingly, the refrigerant passing through the power train chiller 15 may be evaporated.

The refrigerant absorbing heat of the coolant may be discharged to the chiller recovery pipe 163 through the refrigerant outlet of the power train chiller 15.

The refrigerant at the chiller recovery pipe 163 may flow from the chiller junction point 165 to the accumulation pipe 170 and flow into the auxiliary heat exchanger 200.

The waste heat expansion valve 161 may be located between the first connection point 151 and the refrigerant inlet of the power train chiller 15.

The waste heat expansion valve 161 may include an electronic expansion valve (EEV).

The waste heat expansion valve 161 may adjust a pressure and a flow rate of the refrigerant flowing through the chiller pipe 160 through opening control.

The chiller valve 164 may be located between the chiller junction point 165 and the refrigerant outlet of the power train chiller 15.

The chiller valve 164 may include a solenoid valve.

The chiller valve 164 may be installed at the chiller recovery pipe 163 to prevent a backflow of the refrigerant and to protect the power train chiller 15. The chiller valve 164 may limit the refrigerant flow of the chiller recovery pipe 163 through an ON/OFF operation.

Meanwhile, the heat pump 1 may further include a room heater 60 for providing continuous heating to the room in a dehumidification or defrost mode.

The room heater 60 may operate to maintain heating in the room when operated in the dehumidification or defrost mode during the heating operation.

Specifically, the room heater 60 may include a heater 63 generating heat, a heater line 68 through which the coolant for absorbing heat of the heater 63 circulates, a heater pump causing the coolant to flow into the heater line 68, and a heater core 65 heated by the coolant passing through the heater 63.

The heater pump 61 may be installed at the heater line 68. In addition, the heater pump 61 may guide the flow of the coolant to dissipate heat from the heater 63. For example, the heater pump 61 may operate to cause the coolant stored in the storage tank (not shown) to flow into the heater line 68.

The heater 63 may include an electric heater. In the process of passing through the heater 63, the coolant may absorb heat generated by the heater 63, and thus a temperature thereof may increase.

The heater core 65 may be installed at the heater line 68. For example, the heater core 65 may be formed of a metal plate having high thermal conductivity.

The coolant passing through the heater 63 may heat the heater core 65, while passing through the heater core 65. Here, air may be blown to pass through the heater core 65 having a high temperature. For example, air blowing may be generated by an operation of the indoor fan 36.

The warm air passing through the heater core 65 may be discharged into the room. Accordingly, the room may be provided with continuous heating even in a dehumidification or defrost mode in which the indoor heat exchanger 35 performs the function of an evaporator.

Meanwhile, the heat pump 1 may further include a controller 300 for controlling a cycle of the refrigerant and coolant.

The controller 300 may control each component forming the cycle of the refrigerant and the coolant, such as the compressor 100, the outdoor expansion valve 118, the indoor expansion valve 135, the four-way valve 110, the room heater 60, the outdoor fan 46, and the like.

The heat pump 1 may include a memory 310 which is a storage device.

The memory 310 may store a previous driving record of the electric vehicle by the controller 300.

For example, when the ignition of the electric vehicle is turned off, the controller 300 may store an operation mode of the heat pump 1 and performing information of the operation mode at the OFF time point in the memory 310.

When the ignition of the electric vehicle is turned on again thereafter, the controller 300 may receive the previous operation record from the memory 310 and use the received previous operation record in controlling an operation mode at a current time.

In addition, the memory 310 may store in advance condition information for controlling the various driving modes of the electric vehicle.

Specifically, the memory 310 may store in advance condition information for driving in a waste heat recovery mode, basic condition information for each indicator for determining whether frost sticking occurs, a duration time condition for each indicator that satisfies the basic condition, information on an operation time, and condition information for flash fogging determination.

In addition, the memory 310 may store in advance information on a target temperature of air discharged to a room. The target temperature is determined based on a detected outdoor temperature, an input user setting temperature, a detected indoor temperature, and the like as variables. Therefore, the target temperature information for the variables may be stored as a table in the memory 310 in advance.

In addition, the memory 310 may store in advance saturation pressure information and dew point information according to an outdoor temperature.

In addition, information on an operation mode determined based on the extracted target temperature and the outdoor temperature as variables may be stored as a table in the memory 310 in advance.

The heat pump 1 may further include a timer 320 which may measure an operation time of the operation mode being performed.

The timer 320 may measure the operation time of the operation mode performed by the heat pump 1 and provide the measured operation time to the controller 300. The controller 300 may store the received operation time in the memory 310.

In one example, the timer 320 may measure an operation time during which the heating mode or the defrost mode is performed. In addition, the controller 300 may detect the operation time of the heating mode or the defrost mode in real time from the timer 320.

In addition, the controller 300 may store a total operation time in the memory 310 when the heating mode or the defrost mode is terminated.

The heat pump 1 may further include a plurality of sensors PT and CT installed at the refrigerant line through which the refrigerant circulates and the coolant line through which the coolant circulates as described above.

The plurality of sensors PT and CT may detect a state of the refrigerant or the coolant. For example, the plurality of sensors may include a refrigerant sensor PT detecting a pressure and a temperature of the refrigerant and a coolant sensor CT detecting a temperature of the coolant.

The plurality of sensors PT and CT may provide the detection information on the state of the coolant and the refrigerant to the controller 300. The controller 300 may determine an operation mode based on the detection information provided from the plurality of sensors PT and CT and control each component of the heat pump 1 to perform the determined operation mode.

The coolant sensor CT may be installed at the coolant line circulating to dissipate heat of electrical components of the electric vehicle. The coolant sensor CT may be provided in plurality.

The refrigerant sensor PT may include an outdoor heat exchange sensor 370 installed on one side of the outdoor heat exchanger 370.

The outdoor heat exchange sensor 370 may detect a temperature and pressure of the refrigerant passing through the outdoor heat exchanger 45. For example, the outdoor heat exchange sensor 370 may be installed at the outdoor connection pipe 113.

Therefore, in the heating mode, the controller 300 may measure a refrigerant pressure at an outlet of the outdoor heat exchanger 45 using the detection information from the outdoor heat exchange sensor 370.

The refrigerant pressure at the outlet of the outdoor heat exchanger 45 may be referred to as "outdoor heat exchanger outlet pressure."

The outdoor heat exchanger outlet pressure is used as a determination factor for determining whether frost sticking occurs (to be described later).

In addition, the refrigerant sensor PT may further include a compressor inlet sensor 360 installed on the intake side of the compressor 100.

The compressor inlet sensor 360 may detect a temperature and pressure of the refrigerant intaken into the compressor 100. For example, the compressor inlet sensor 360 may be installed at the intake pipe 105.

Therefore, the controller 300 in the heating mode may measure a temperature of the refrigerant intaken into the compressor 100 using the detection information of the compressor inlet sensor 360.

The temperature of the refrigerant intaken into the compressor 100 may be referred to as a "compressor inlet temperature."

The compressor inlet temperature is used as a determination factor for determining whether frost sticking occurs (to be described later).

The coolant sensor CT may include a coolant temperature sensor 350 that detects a temperature of the coolant circulating through the power train module 10.

The coolant temperature sensor 350 may be installed at the power train line 19. Specifically, the coolant temperature sensor 350 may be installed at the power train line 11 to detect a temperature of the coolant passing through the power train module 10. For example, the coolant temperature sensor 350 may be located on the opposite side of the power train valve 19.

That is, the coolant temperature sensor 350 may be installed at the coolant outlet of the power train module 10 to detect the temperature of the coolant.

The controller 300 may determine whether to enter the waste heat recovery mode using the detection information of the coolant temperature sensor 350. That is, the controller 300 may control to operate in a normal heating mode or the waste heat recovery mode based on the detection information of the coolant temperature sensor 350.

In addition, the controller 300 may control a selective operation of the power train pump 13 and the radiator pump 16 according to the temperature of the coolant.

Of course, the coolant sensor CT may further include a coolant temperature sensor installed at the battery line 28 to detect the temperature of the coolant circulating through the battery 20.

In addition, the heat pump 1 may further include an outdoor temperature sensor 330 detecting an outdoor temperature, an indoor temperature sensor 340 detecting an indoor temperature of the electric vehicle, a solar radiation sensor (not shown) measuring the amount of solar radiation incident on the interior of the electric vehicle, and a passive infrared (PIR) sensor (i.e., a human body sensor) (not shown) detecting occupancy.

The outdoor temperature sensor 330 may be provided to detect an outdoor (or ambient air) temperature of the electric vehicle. The indoor temperature sensor 340 may be provided to detect an indoor (or cabin) temperature of the electric vehicle. For example, the room temperature sensor 340 may be installed at the room.

The outdoor temperature sensor 330 and the indoor temperature sensor 340 may provide the detection information to the controller 300. Similarly, the solar radiation sensor and the PIR sensor may also provide detection information to the controller 300.

In addition, the heat pump 1 may further include a temperature sensor (not shown) for detecting a temperature of an electric component of the electric vehicle which generates heat. For example, the heat pump 1 may further include a temperature sensor detecting a temperature of the power train module 10 and the battery 20.

Meanwhile, the heat pump 1 may further include a surge tank 50.

The surge tank 50 may be formed to have a predetermined volume for heat dissipation of the drive motor. In addition, the surge tank 50 may be filled with air. Therefore, the surge tank 50 may be utilized in the heating mode for recovering waste heat generated in the power train module 10.

Hereinafter, the auxiliary heat exchanger 200 will be described with reference to FIG. 3.

The auxiliary heat exchanger 200 may include a case 210 forming an appearance, a discharge pipe 205 coupled to the intake pipe 105, an intake pipe 207 coupled to the accumulation pipe 170, an inlet pipe 241 coupled to the first auxiliary pipe 141, an outlet pipe 242 coupled to the second auxiliary pipe 142, and a spiral pipe 245 connecting the inlet pipe 241 and the outlet pipe242in the case.

The case 210 may form an internal space in which the introduced refrigerant may be separated in phase. For example, the case 210 may include a cylindrical shape.

The intake pipe 207 may extend to a lower side of the internal space through an upper surface of the case 210. For example, the intake pipe 207 may extend along a central axis of the case 210.

The upper end of the intake pipe 207 may be coupled to the accumulation pipe 170.

A lower end of the intake pipe 207 may be spaced apart above a lower surface of the case 210. Therefore, the refrigerant flowing into the intake pipe 207 through the accumulation pipe 170 may be discharged to the lower surface of the case 210 and fill the internal space.

The refrigerant discharged from the intake pipe 207 to the internal space may be separated into a liquid refrigerant and a gaseous refrigerant in the internal space. In addition, the gaseous refrigerant may flow into the discharge pipe 205 and may be recovered to the compressor 100 through the intake pipe 105.

The discharge pipe 205 may extend to the internal space through the upper surface of the case 210.

The upper end of the discharge pipe 205 may be coupled to the intake pipe 105.

A lower end of the discharge pipe 205 may be located above the internal space. For example, the lower end of the discharge pipe 205 may be located above an upper end of the spiral pipe 245.

In addition, the lower end of the discharge pipe 205 may extend to be rounded in one direction and may form an opening so that the gaseous refrigerant filling the internal space is introduced. Therefore, the gaseous refrigerant flowing into the discharge pipe 205 may flow into the intake pipe 105.

The auxiliary heat exchanger 200 may perform heat exchange between refrigerants to supercool the condensation refrigerant.

The inlet pipe 241 may extend to a lower side of the internal space through an upper surface of the case. For example, the inlet pipe 241 may extend downward in an extending direction of the intake pipe 207.

The upper end of the inlet pipe 241 may be coupled to the first auxiliary pipe 141.

The lower end of the inlet pipe 241 may be coupled to the spiral pipe 245.

The spiral pipe 245 may extend upward from a lower side of the internal space to surround the inlet pipe 241 and/or the intake pipe 207 a plurality of times from the outside. For example, the spiral pipe 245 may extend upward to have a helical shape.

Accordingly, the condensation refrigerant flowing through the spiral pipe 245 may be heat-exchanged with the evaporative refrigerant discharged from the intake pipe 207 to the internal space. Therefore, the condensation refrigerant having a relatively high temperature may be sub-cooled by heat exchange with the relatively low temperature evaporative refrigerant.

In addition, the evaporative refrigerant may be heat-exchanged with the condensation refrigerant having a relatively high temperature to evaporate the remaining liquid refrigerant as a gaseous refrigerant. As a result, the amount of the gaseous refrigerant recovered by the compressor 100 may be increased.

The spiral pipe 245 may be located in the internal space. Also, an upper end of the spiral pipe 245 may be coupled to the outlet pipe 242.

The outlet pipe 242 may extend upwardly through the upper surface of the case 210 from the spiral pipe 245. An upper end of the outlet pipe 242 may be coupled to the second auxiliary pipe 142.

Meanwhile, according to the auxiliary heat exchanger 200, it is possible to increase sub-cooling of the condensation refrigerant to reduce a flash gas defined as a refrigerant gas evaporated from a non-evaporator.

The flash gas is a gas that causes a decrease in performance due to loss of a flow rate of the refrigerant supplied to the evaporator and the amount of latent heat. Therefore, since the auxiliary heat exchanger 200 further secure the sub-cooling of the condensation refrigerant relatively and provide the same to the expansion valves 118, 135, 156, 161, and 118, thereby reducing the flash gas.

In addition, the increase in the sub-cooling of the condensation refrigerant may further increase a liquid ratio of the refrigerant at the inlet side of the evaporator. Accordingly, the amount of intaken heat is advantageously increased during the evaporation process.

The plurality of sensors PT and CT installed at the heat pump 1 provide detection information of a working fluid to the controller 300, and the controller 300 may control to maintain an appropriate sub-cooling based on the detection information.

Hereinafter, a flow and a cycle of a working fluid according to an operation mode of the heat pump 1 according to the embodiment of the present disclosure will be described. Here, the working fluid includes a refrigerant defined as a primary fluid and a coolant defined as a secondary fluid.

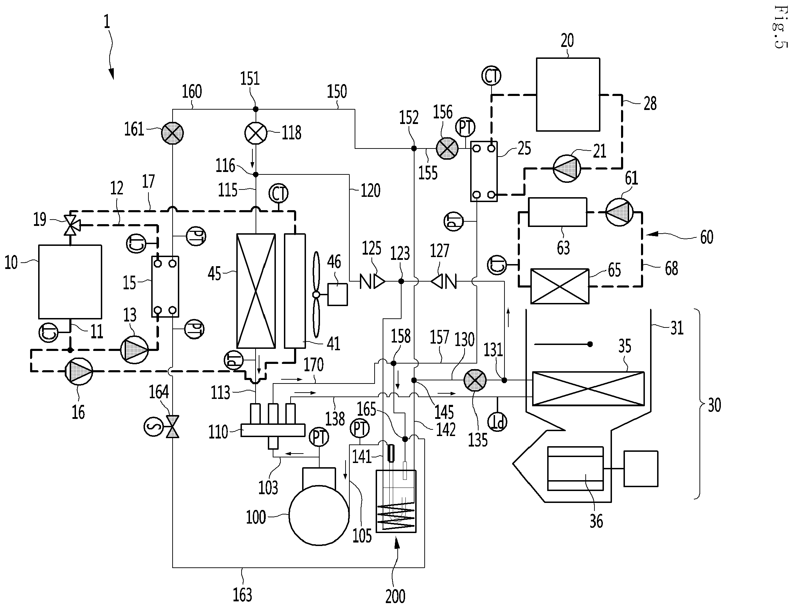

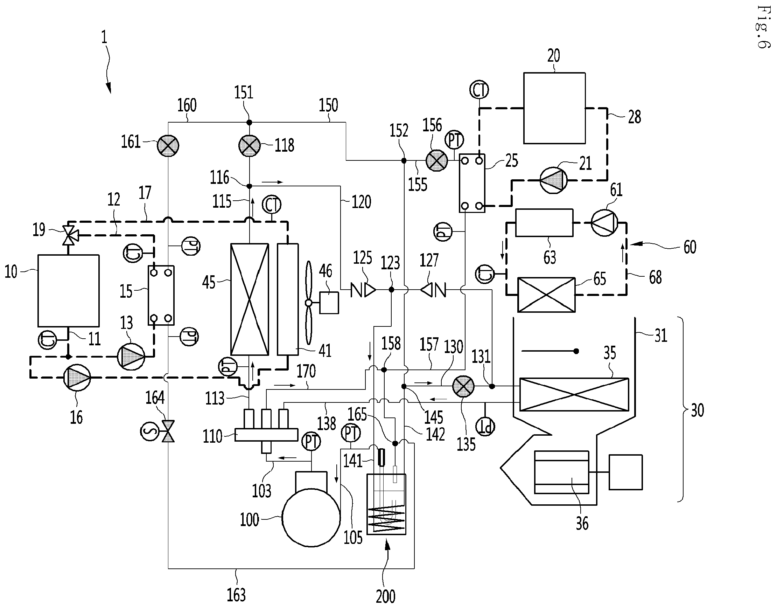

For convenience of explanation and understanding, the plurality of pumps 13, 16, 21, and 61 and the plurality of valves 118, 135, 156, 161, and 164 described above with reference to FIGS. 5 and 6 are shown to indicate ON or OFF depending on coloration (shading). That is, a pump or a valve colored in the drawing indicates the OFF state and a pump or a valve not colored in the drawing indicates the ON state.

FIG. 5 is a view showing a flow of a working fluid in a heating mode of a heat pump system for an electric vehicle according to an embodiment of the present disclosure.

The heating mode described with reference to FIG. 5 may be referred to as a "normal heating mode."

Referring to FIG. 5, in the heating mode, the waste heat expansion valve 161, the cooler expansion valve 156, and the indoor expansion valve 135 may be fully closed. The chiller valve 164 may also be closed.

The outdoor expansion valve 118 may be opened. The outdoor expansion valve 118 may expand the passing refrigerant through opening control.

Meanwhile, in general, the heating mode of the electric vehicle may be operated in a season, weather, etc. in which an outdoor temperature is low. Therefore, in the heating mode, the power train pump 13, the radiator pump 16, and the battery pump 21 may not operate (OFF).

In addition, a room heater 60 may not operate in the heating mode in which the indoor heat exchanger 35 operates as a condenser. That is, the room heater 60 may operate in the heating mode (defrost mode, dehumidification mode, etc.) in which the indoor heat exchanger 35 operates as an evaporator. Thus, the heater pump 61 may not operate (OFF).

The high temperature, high pressure compressed refrigerant discharged from the compressor 100 may flow into the indoor connection pipe 138 via the four-way valve 110. In addition, the compressed refrigerant of the indoor connection pipe 138 may be condensed, while passing through the indoor heat exchanger 35.

The condensation refrigerant passing through the indoor heat exchanger 35 may flow into the flow pipe 120 through the indoor branch point 131 because the indoor expansion valve 135 is closed.

The condensation refrigerant flowing into the flow pipe 120, may pass through the second flow valve 127 may flow into the first auxiliary pipe 141. Here, the first flow valve 125 may limit a flow direction of the refrigerant so that the condensation refrigerant of the flow pipe 120 may not flow to the outdoor branch point 116.

The condensation refrigerant flowing into the first auxiliary pipe 141 is sub-cooled, while passing through the auxiliary heat exchanger 200, and the sub-cooled refrigerant is flowing into the second auxiliary pipe 142.

Since the indoor expansion valve 135 is in a closed state, the sub-cooled refrigerant of the second auxiliary pipe 142 may flow into the common pipe 150.

The refrigerant flowing into the common pipe 150 may flow into the outdoor pipe 115 because the waste heat expansion valve 161 and the cooler expansion valve 156 are closed.

The refrigerant flowing into the outdoor pipe 115 may be expanded, while passing through the outdoor expansion valve 118. The expanded refrigerant may flow into the outdoor heat exchanger 45 and evaporated.

The refrigerant evaporated at the outdoor heat exchanger 45 may flow into the accumulation pipe 170 via the four-way valve 110. In addition, the evaporative refrigerant of the accumulation pipe 170 may be heat-exchanged with the condensation refrigerant described above, while passing through the auxiliary heat exchanger 200. Thereafter, the evaporative refrigerant in a gaseous state separated from the liquid phase at the auxiliary heat exchanger 200 may flow into the intake pipe 105.

The refrigerant flowing into the intake pipe 105 may be recovered to the compressor 100.

FIG. 6 is a view showing a flow of a working fluid in a defrost mode of a heat pump system for an electric vehicle according to an embodiment of the present disclosure. Specifically, FIG. 6 is a view illustrating a flow of a coolant and a refrigerant based on the defrost mode (hereinafter, referred to as a defrost heating mode) that provides heating to a room.

Referring to FIG. 6, in the defrost heating mode, the outdoor heat exchanger 45 may operate as a condenser and the indoor heat exchanger 35 may operate as an evaporator.

Hereinafter, a refrigerant cycle in the defrost mode will be described.

When the evaporation temperature of the refrigerant flowing in the pipe of the outdoor heat exchanger 45 in the heating mode is maintained at 0°C or lower, frost occurs on condensed water of the humid air present on a surface of the outdoor heat exchanger 45 and is stuck to the surface.

Therefore, the high temperature, high pressure compressed refrigerant discharged from the compressor 100 may flow into the outdoor heat exchanger 45 via the four-way valve 110.

The outdoor heat exchanger 45 may allow the ambient air and the compressed refrigerant to be heat-exchanged with each other by the driving of the electric vehicle and/or outdoor fan 46.

That is, the high-temperature compressed refrigerant may flow in the outdoor heat exchanger 45 and melt the frost stuck to the outdoor heat exchanger 45. That is, the high temperature compressed refrigerant and frost may be heat-exchanged.

Thus, frost stuck to the surface of the outdoor heat exchanger 45 may be melted and flow down, performing defrosting.

In addition, the refrigerant passing through the outdoor heat exchanger 45 may be condensed. The condensation refrigerant may flow into the outdoor pipe 115.

Meanwhile, the air blown by the operation of the outdoor fan 46 may generate convective heat transfer of the compressed refrigerant passing through the outdoor heat exchanger 45. However, since the convective heat transfer causes heat loss, a heat transfer rate between the frost and the compressed refrigerant through the surface of the outdoor heat exchanger 45 may be reduced. That is, the operation (ON) of the outdoor fan 46 may cause heat loss in the process of changing the frost into water to reduce the defrosting performance.

Thus, in the defrost mode, the outdoor fan 46 may be turned off. For example, the controller 300 may maximize heat transfer efficiency between the frost and the high temperature compressed refrigerant by turning off the outdoor fan 46 when entering the defrost mode.

Accordingly, it is possible to prevent convective heat transfer that causes heat loss according to the operation of the outdoor fan 46. Therefore, loss of defrost energy may be reduced.

Meanwhile, the condensation refrigerant passing through the outdoor heat exchanger 45 may flow into the flow pipe 120. In addition, the condensation refrigerant flowing into the flow pipe 120 passes through the first flow valve 125 and flows into the first auxiliary pipe 141. In this case, the second flow valve 127 may limit a flow direction of the refrigerant so that the condensation refrigerant may not flow toward the indoor branch point 131.

The condensation refrigerant flowing into the first auxiliary pipe 141 may be sub-cooled by heat exchange with the evaporative refrigerant at the auxiliary heat exchanger 200.

Specifically, the condensation refrigerant of the first auxiliary pipe 141 may be heat-exchanged with the gaseous and/or liquid evaporative refrigerant filling the internal space of the case, while flowing through the inlet pipe 241, the spiral pipe 245 and outlet pipe 242 in turn. Thus, the condensation refrigerant may be sub-cooled by heat exchange.

The sub-cooled refrigerant may flow to the second auxiliary pipe 142 through the outlet pipe 242 and flow into the indoor pipe 130.

The sub-cooled refrigerant flowing into the indoor pipe 130 may be expanded, while passing through the indoor expansion valve 135. The expanded refrigerant may flow into the indoor heat exchanger 35.

The expanded refrigerant may be evaporated by heat exchange with air by the indoor fan 36 in the indoor heat exchanger 25. The evaporated refrigerant may be discharged through the indoor connection pipe 138. The evaporative refrigerant of the indoor connection pipe 138 flows into the accumulation pipe 170 via the four-way valve 110. In addition, the evaporative refrigerant flowing into the accumulation pipe 170 may exchange heat with the condensation refrigerant at the auxiliary heat exchanger 200.

Specifically, the evaporative refrigerant flowing into the intake pipe 207 through the accumulation pipe 170 may be discharged to the internal space of the case 210. Therefore, the internal space of the case 210 may be filled with the evaporative refrigerant in liquid and gaseous states.

Here, the evaporative refrigerant may absorb heat of the condensation refrigerant passing through the spiral pipe 245. Therefore, the evaporative refrigerant in the liquid state may be evaporated in a gas phase. Evaporative refrigerant in a gaseous state flows into the discharge pipe 205.

The evaporative refrigerant flowing into the discharge pipe 205 may be recovered to the intake side of the compressor 100 through the intake pipe 105, thereby forming a cycle.

Meanwhile, since the indoor heat exchanger 35 operates as an evaporator in the defrost mode, the indoor heat exchanger 35 may cool ambient air of the indoor duct 31. Specifically, the indoor heat exchanger 35 operates as an evaporator so that the refrigerant may absorb heat from the ambient air.

By the operation of the indoor fan 36, the relatively high temperature indoor air flowing into the indoor duct 31 may be cooled by releasing heat to the refrigerant flowing through the indoor heat exchanger 35.

Thus, the heater actuator 60 may be turned on to maintain the heating provided to the room. Accordingly, even in the defrost mode, it is possible to continuously provide heating to the room. That is, the defrost heating mode may be performed.

When the heater actuator 60 is operated, the heater pump 61 is operated (ON) so that the coolant may circulate through the heater line 68. The coolant may absorb heat, while passing through the heater 63.

The coolant passing through the heater 63 may pass through the heater core 63 in a high temperature state. Therefore, the heater core 63 may be heated by receiving heat based on the heater 63 from the coolant.

Air blown by the indoor fan 36 may allow the air flowing into the indoor duct 31 to pass through the heater core 63. Therefore, the temperature cooled by the indoor heat exchanger 35 may be increased again, while passing through the heat core 63.

Air passing through the heater core 63 may be discharged back to the room. Accordingly, even when the indoor heat exchanger 35 operates as an evaporator, heating may be continuously provided to the room.

As described above, in the defrost heating mode, the outdoor expansion valve 151, the waste heat expansion valve 161, and the cooler expansion valve 156 may be fully closed. The chiller valve 164 may also be closed.

In addition, the indoor expansion valve 135 may be opened. The indoor expansion valve 135 may expand the passing refrigerant through opening control. Therefore, the sub-cooled refrigerant of the second auxiliary pipe 142 may flow into the indoor pipe 130 and be expanded by the indoor expansion valve 135.

Meanwhile, the heat pump 1 may operate in the waste heat recovery mode in which the coolant circulating through the power train module 10 and/or the battery 20 is used as a heat source of the refrigerant evaporation in order to reduce power consumption of the battery 20 in the heating mode described above.

In the waste heat recovery mode, the indoor expansion valve 135 may be fully closed. The waste heat expansion valve 161 and the chiller valve 164 may be opened. In addition, the power train pump 13 operates (ON). The heater pump 61 may not operate (OFF).

In the waste heat recovery mode, the compressed refrigerant discharged from the compressor 100 may flow into the indoor heat exchanger 35 through the four-way valve 110. The compressed refrigerant may be condensed, while passing through the indoor heat exchanger 35.

The condensation refrigerant passing through the indoor heat exchanger 35 may flow into the first auxiliary pipe 141 along the flow pipe 120 because the indoor expansion valve 135 is closed.

Also, the condensation refrigerant flowing into the first auxiliary pipe 141 may be sub-cooled, while passing through the auxiliary heat exchanger 200, the sub-cooled refrigerant may flow into the common pipe through the second auxiliary pipe 142.

The refrigerant flowing into the common pipe 150 may flow into the chiller pipe 160 because the outdoor expansion valve 118 and the cooler expansion valve 156 are closed. The refrigerant flowing into the chiller pipe 160 may be expanded, while passing through the waste heat expansion valve 161.

The expanded refrigerant flows into the power train chiller 15 may be heat-exchanged with a high temperature coolant which has absorbed heat of the power train module 10.

That is, the expanded refrigerant may be evaporated, while passing through the power train chiller 15. Here, the power train chiller 15 may operate as an evaporator.

The evaporative refrigerant passing through the power train chiller 15 may flow into the accumulation pipe 170 through the chiller recovery pipe 163 because the chiller valve 164 is in an opened state.

In addition, the evaporative refrigerant flowing into the accumulation pipe 170 may be heat-exchanged with the condensation refrigerant, while passing through the auxiliary heat exchanger 200. In addition, the evaporative refrigerant separated in the gaseous state at the auxiliary heat exchanger 200 may flow into the intake pipe 105 and be recovered to the compressor 100.

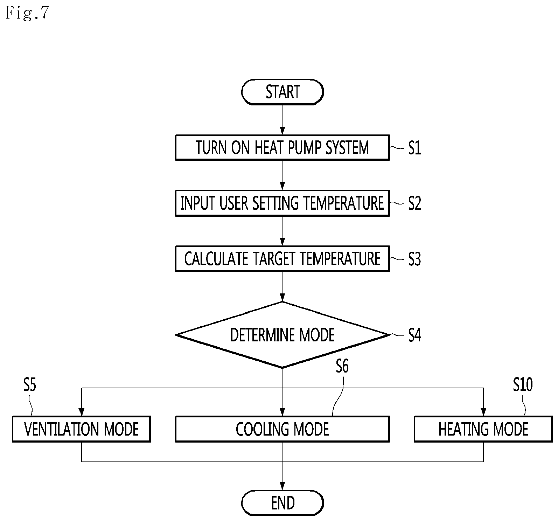

FIG. 7 is a flowchart illustrating a control method for determining an operation mode of a heat pump system for an electric vehicle according to an embodiment of the present disclosure.

Referring to FIG. 7, the control method of the heat pump system 1 for an electric vehicle according to an embodiment of the present disclosure may include a heat pump ON step (S1).

The heat pump ON step may be understood as a step of receiving a user's heat pump operation command by the indoor controller 39.

The user may operate the indoor controller 39 to make the indoor air conditioning environment comfortable. For example, the indoor controller 39 may be provided with an auto input button for automatically determining a current state of the indoor air conditioning environment and providing an optimal operation mode. Of course, the indoor controller 39 may be provided with a manual input button for directly inputting a desired operation mode and an indoor air conditioning environment by the user.

The heat pump 1 may receive a user set temperature (S2).

The user set temperature may be a desired temperature directly set by the user using the indoor controller 39.

When the user inputs the user set temperature, the heat pump 1 may perform the indoor air conditioning in the optimal operation mode by detecting an indoor and outdoor environment and a state of the electric vehicle parts.

That is, the heat pump 1 may detect the user set temperature, outdoor (ambient air) temperature, room temperature, solar radiation, and occupancy, and calculate a target temperature of air discharged into the room based on the detection information (S3).

Specifically, the controller 300 may detect an outdoor temperature from the outdoor temperature sensor 330, detect an indoor temperature from the indoor temperature sensor 340, detect a solar radiation amount by the solar radiation sensor, and detect occupancy by the PIR sensor.

The controller 300 may calculate a target temperature through a table previously stored in the memory 310 based on the detected outdoor temperature, indoor temperature, solar radiation, and occupancy.

That is, the target temperature, which is defined as a temperature of the air discharged into the room, may be determined using the outdoor temperature, the indoor temperature, the solar radiation, and the occupancy as variables. For example, when the user set temperature is 23°C and the outdoor temperature is 0°C, the target temperature of the air discharged to the room may be calculated as 43°C.

In addition, the heat pump 1 may determine an operation mode based on the calculated target temperature (S4).

Specifically, the heat pump 1 may determine an optimal operation mode in which an indoor temperature may reach a user setting temperature among various operation modes of the heat pump 1 based on the calculated target temperature, outdoor temperature, saturation pressure, and dew point.

For example, when the calculated target temperature is 43°C and the outdoor temperature is 0°C, the heat pump may be determined as the heating mode (S10).

The heat pump 1 may determine one operation mode among the ventilation mode (S5), the cooling mode (S6) and the heating mode (S10) through the step of determining the operation mode.

The controller 300 may control each component so that a cycle of the refrigerant and the coolant may operate in the determined operation mode.

Meanwhile, the heat pump 1 may determine whether heat dissipation is necessary by detecting a temperature of the power train module 10 independently of steps S2 to S4. Similarly, the heat pump 1 may determine whether heat dissipation is necessary by detecting the temperature of the battery 20 independently of steps S2 to S4.

When the heat dissipation is required in the power train module 10, the heat pump 1 may control to operate the power train pump 13 or the radiator pump 16 based on the outdoor temperature, the coolant temperature and the operation mode determined in step S4.

For example, the heat pump 1 may control the power train pump 13 to operate when operating in the waste heat recovery mode among the heating mode (S10) to be described later. When the power train pump 13 operates (ON), the waste heat expansion valve 161 may be opened to allow the refrigerant to flow into the power train chiller 15.

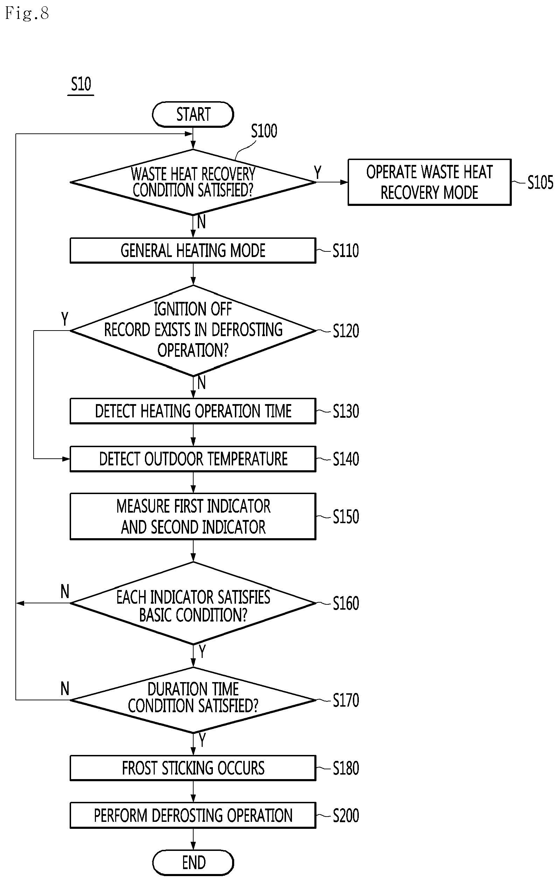

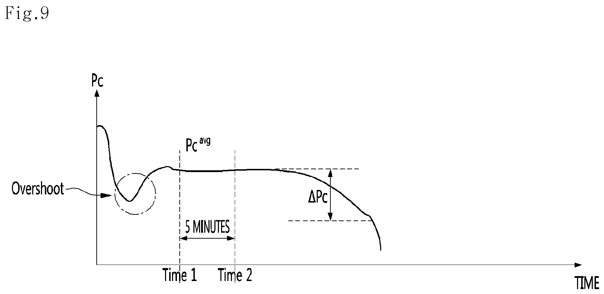

FIG. 8 is a flowchart showing a control method for entering a defrost mode from a heating mode according to an embodiment of the present disclosure, and FIG. 9 is a graph of refrigerant pressure of an outdoor heat exchanger over time showing measurement of a second indicator ΔPc of FIG. 8.

Referring to FIG. 8, when the operation mode is determined as the heating mode S10, the heat pump 1 may determine whether a waste heat recovery condition is satisfied (S100).

The waste heat recovery mode may be defined as a mode in which heat generated from an electric component of the electric vehicle is used as an evaporation heat source of the refrigerant.

Specifically, the waste heat recovery condition may be set to whether a temperature of the coolant for performing heat dissipation of the electric component is higher than a coolant reference temperature. The waste heat recovery condition may be stored in advance in the memory 310.

A coolant reference temperature may be defined as a temperature at which a section in which a viscous force of the coolant changes sharply starts. For example, the coolant reference temperature may be determined to be 10°C.

As an example, the controller 300 may determine whether a temperature of the coolant detected from the coolant temperature sensor 350 is higher than the coolant reference temperature (10°C) so that the coolant may be normally heat-exchanged at the power train chiller 15.

If the temperature of the coolant is higher than the coolant reference temperature, the heat pump 1 may be operated in the waste heat recovery mode described above (S105).

Specifically, the controller 300 may control each component to the heating of the room in the waste heat recovery mode.

For example, the controller 300 may control to fully close the indoor expansion valve 135 and to open the waste heat expansion valve 161 and the chiller valve 164.

In addition, the controller 300 may operate the power train pump 13 (ON). Here, the heater pump 61 may not operate (OFF).

Of course, when heat dissipation of the battery 20 is required, the controller 300 may allow the battery cooler 25 to perform the function of the power train chiller 15 in the same manner by adjusting opening of the cooler expansion valve 156.

Accordingly, the coolant absorbing waste heat of the power train module 10 or the battery 20 may be used as a heat source for evaporation of the refrigerant.

Therefore, it is possible to increase an evaporation temperature than using the ambient air as a heat source for evaporation of the refrigerant in the outdoor heat exchanger 45. As a result, it is possible to improve the heating performance of the heat pump 1.

In addition, according to the waste heat recovery mode, power consumption of the battery may be minimized and thermal comfort of the occupant may be enhanced by utilizing the waste heat generated from the electrical components of the electric vehicle.

The heat pump 1 may not use the outdoor heat exchanger 45 in the waste heat recovery mode. In this case, the frost sticking described above does not occur in the waste heat recovery mode. Accordingly, the heat pump 1 may determine whether the waste heat recovery condition is satisfied before determining whether frost sticking occurs.

Meanwhile, if the temperature of the coolant is lower than the coolant reference temperature, the heat pump 1 may operate in the general heating mode described above (S110).

When the normal heating mode is performed, the frost sticking described above may occur because the outdoor heat exchanger 45 evaporates the refrigerant through heat exchange.

When the operation is started in the normal heating mode, the heat pump 1 may determine whether the ignition is turned off (OFF) during the operation in the defrost mode in the immediately previous operation of the electric vehicle (S120).

Specifically, the controller 300 may receive a previous driving record from the memory 310 and determine whether the defrost mode is operated at the end of the driving. That is, the controller 300 may determine whether to record the operation interruption according to the start-off during the operation in the defrost mode. For example, the controller 300 may determine whether there is a record that the ignition of the electric vehicle is turned off, while operating in the defrost mode, in the memory 310.

The heat pump 1 may detect a heating mode operation time if the ignition is not turned off, while the heat pump system is driven in the defrost mode, from a previous driving record. (S130)

The heating mode operation time may be defined as a continuous operation time operated in the heating mode described above.

Specifically, the controller 300 may be provided with an elapsed time during which the heat pump system is operated in the normal heating mode from the timer 320.

The heat pump 1 may detect an outdoor temperature (S140).

Specifically, the controller 300 may be provided with an outdoor temperature detected from the outdoor temperature sensor 330.

Meanwhile, if the ignition is turned off while defrosting is performed in the immediately previous operation, it may be understood that defrosting of the outdoor heat exchanger 45 was incompletely finished. Therefore, if the ignition of the electric vehicle is turned on again afterwards, it must be determined that frost sticking occurs immediately because frost is still stuck to the surface of the outdoor heat exchanger 45, to prevent a sudden fall of heating performance.

That is, the heat pump 1 may omit the determination on the elapsed time (hereinafter, "operation time") during which the heat pump system is operated in the general heating mode among the basic conditions of the determination factors (hereinafter, "indicator") for determining whether frost sticking occurs (to be described later).

Therefore, when the defrost mode is operated at an immediately previous operation termination time point, the heat pump 1 may omit step S130 and may immediately detect an outdoor temperature (S140) in consideration of driving characteristics of the electric vehicle.

Specifically, the controller 300 may receive the previous driving record information from the memory 310 and if it is determined that the driving of the electric vehicle is terminated while driving in the defrost mode, the controller 300 may omit measurement of the operation time of the heating mode (S130) and detect the outdoor temperature (S140).

Accordingly, although the ignition is turned on again in the incomplete defrosting state descried above, whether frost sticking may be determined immediately, without having to determine an unnecessary operation time condition, and thus, the defrost mode may be rapidly entered.

Meanwhile, after detecting the outdoor temperature, the heat pump 1 may measure a first indicator and a second indicator defined as factors for determining whether the frost sticking occurs (S150).

Here, the first indicator is defined as the compressor inlet temperature. The second indicator is defined as a variation of the outlet pressure of the outdoor heat exchanger.

The controller 300 may measure the first indicator based on the detection information of the compressor inlet sensor 360. That is, the controller 300 may measure the temperature of the refrigerant intaken into the compressor 100 from the compressor inlet sensor 360.

The controller 300 may measure the second indicator based on the detection information of the outdoor heat exchange sensor 370.

The measurement of the second indicator will be described in detail with reference to FIG. 9. FIG. 9 is a graph showing an outlet pressure of the outdoor heat exchanger over time.

The controller 300 may measure the pressure of the refrigerant passing through the outdoor heat exchanger 45 from the outdoor heat exchange sensor 370, that is, the outlet pressure of the outdoor heat exchanger.

Here, the controller 300 may measure the outlet pressure of the outdoor heat exchanger after a first time Time1 has elapsed since the operation was started in the heating mode. For example, the first time Time1 may be set to 10 minutes to 15 minutes.

The first time Time1 may be understood as the initial startup time to start the operation in the heating mode.

In the initial startup, that is, before the first time Time1 elapses, the outdoor heat exchanger outlet pressure Pc may be overshot.

That is, since the outlet pressure Pc is not constant but unstable until the first time Time1, the controller 300 may measure the outlet pressure of the outdoor heat exchanger when the first time Time1 has lapsed.

When the first time (Time1) has elapsed, the controller 300 may calculate an average value Pcavg of the outlet pressure of the outdoor heat exchanger measured at every preset measurement time at a preset time interval.

For example, the preset time interval may be set to 5 minutes. That is, the controller 300 may calculate the average value Pcavg of the outlet pressure of the outdoor heat exchanger measured at every preset measurement time from the first time Time1 to a second time Time2 which is 5 minutes later.

In addition, the preset measurement time may be set to 1 minute. That is, the controller 300 may calculate the average value Pcavg when the outdoor heat exchanger outlet pressure measured every one minute is generated five times.

In addition, the controller 300 may update the average value Pcavg calculated each time the outdoor heat exchanger outlet pressure is generated five times during a predetermined operation time. The predetermined operation time is a time for securing the stable average value Pcavg of the outlet pressure of the outdoor heat exchanger.

The predetermined operation time may be understood as a time for which the outdoor heat exchanger 45 normally evaporates the refrigerant to maintain an almost constant level of the outdoor heat exchanger outlet pressure Pc. That is, the average values recorded during the predetermined operation time may have a relatively small deviation. For example, the predetermined operation time may be set to 20 minutes.

The controller 300 may stop updating the average value Pavg when the predetermined operation time elapses.

In addition, the controller 300 may store the updated average value Pcavg in the memory 310.

As frost sticking grows (or progresses) on the surface of the outdoor heat exchanger 45, the pressure of the evaporative refrigerant and superheating may be reduced. Therefore, a time for determining frost sticking to operate in the defrost mode may be set to a time when the average of the outdoor heat exchanger outlet pressure is rapidly reduced.

Thus, the second indicator is defined as a variation ΔPc of the outdoor heat exchanger outlet pressure.

The variation ΔPc of the outlet pressure of the outdoor heat exchanger follows Equation 1 below.

[Equation 1]

$$\triangle Pc = Pcavg - Pc$$

That is, the outlet pressure variation ΔPc of the outdoor heat exchanger may be defined as a difference between the average value Pcavg and the detected outdoor heat exchanger outlet pressure Pc.

Here, the detected outdoor heat exchanger outlet pressure Pc is defined as an outdoor heat exchanger outlet pressure Pc detected after a fourth operation time has elapsed (to be described later).

The fourth operation time may be defined as a minimum continuous operation time of the heating mode in which frost sticking may occur based on the outdoor heat exchanger outlet pressure Pc as an indicator.

Meanwhile, the controller 300 may independently perform measurement of the first indicator and measurement of the second indicator. That is, the controller 300 may determine whether frost sticking occurs regarding the first indicator and whether frost sticking occurs regarding the second indicator in parallel.

Whether to determine frost sticking occurs on the surface of the outdoor heat exchanger 45 may be understood as determining whether frost is stuck (frost sticking) to the surface of the outdoor heat exchanger 45.

Therefore, when it is determined that frost sticking occurs regarding at least one of the first indicator and the second indicator, the defrost mode may be entered.

The heat pump 1 may determine whether each of the measured indicators satisfies the basic condition (S160).

That is, the controller 300 may determine whether the measured first indicator and the second indicator satisfy the respective basic conditions.

Specifically, the controller 300 may determine whether the measured first indicator satisfies basic condition. In addition, the controller 300 may determine whether the measured second indicator satisfies the basic condition.

The basic condition may be defined as a minimum continuous operation time (first to fourth operation times) of the heating mode of each indicator in which frost sticking may occur, an outdoor temperature condition, and a designed (temperature or pressure) condition for each indicator corresponding to the outdoor temperature condition.

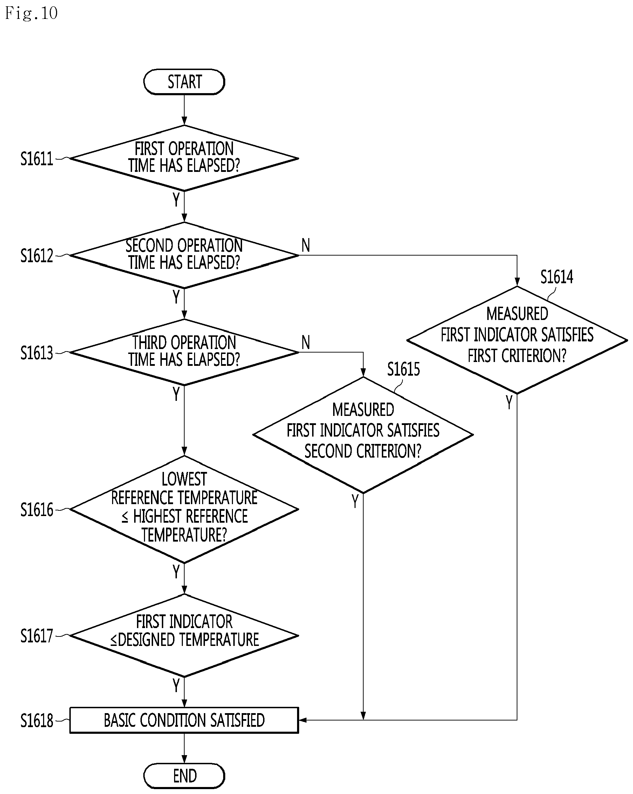

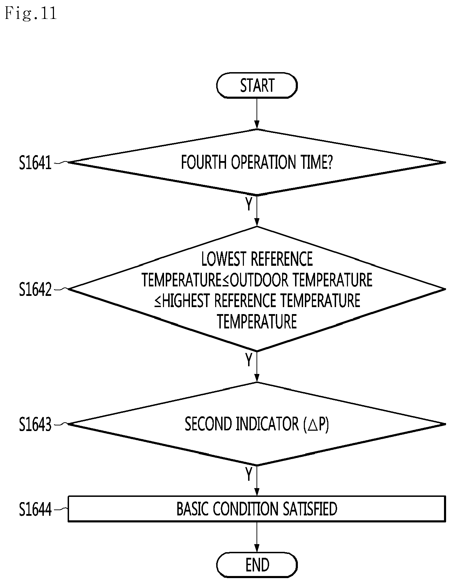

The step (S160) of determining whether each indicator satisfies the basic condition will be described later in detail with reference to FIGS. 10 and 11.

When it is determined that each indicator satisfies the basic condition, the heat pump 1 may determine whether a duration time condition is satisfied (S170).

That is, if at least one of the measured first indicator and the measured second indicator satisfies the basic condition, the controller 300 may determine whether a duration time of the indicator satisfying the basic condition satisfies the duration time condition.

The duration time condition may be set to be different for each indicator and stored in advance in the memory 310.

The duration time condition may be set on the premise that the first indicator and/or the second indicator satisfy the basic condition.

In other words, the duration time condition may be defined as a time for which the indicator satisfying the basic condition causes frost sticking. Specifically, the duration time condition for the first indicator may be set to 3 minutes. The duration time condition for the second indicator may be set to 5 minutes.

When the duration time condition is satisfied, the heat pump 1 determine that frost sticking occurs (S180).

Specifically, the controller 300 may determine that frost sticking occurs if the measured first indicator (compressor inlet temperature) satisfies the basic condition and satisfies the duration time condition (e.g., 3 minutes).

In addition, the controller 300 may determine that frost sticking occurs if the measured second indicator (variation of the outdoor heat exchanger outlet pressure) satisfies the basic condition and the duration time condition (e.g., 5 minutes) is satisfied.

If it is determined that frost sticking occurs, the heat pump 1 may start the operation in the defrost mode described above (S200).

That is, when it is determined that frost sticking occurs regarding at least one of the first indicator and the second indicator, the controller 300 may control a plurality of valve positions according to the defrost mode.

Specifically, the controller 200 may control the four-way valve 110 to switch a flow direction of the refrigerant, control the outdoor expansion valve 151, the waste heat expansion valve 161, the cooler expansion valve 156, and the chiller valve 164 to be closed, and control the indoor expansion valve 135 to be opened.

Accordingly, defrosting may be performed as the high-temperature compressed refrigerant flows to the outdoor heat exchanger 45.

FIG. 10 is a flowchart illustrating a control method for determining whether the first indicator satisfies the basic condition according to an embodiment of the present disclosure.

Referring to FIG. 10, the determining of whether each indicator satisfies the basic condition (S160) may include determining whether the first indicator satisfies the basic condition is. Here, the first indicator may be understood as the compressor inlet temperature measured in step S150.

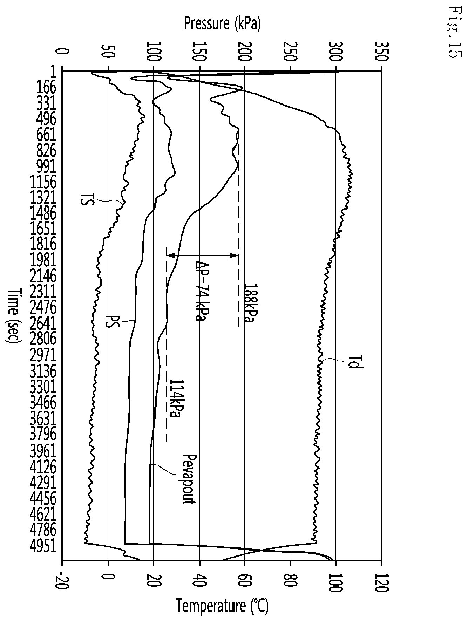

In the heating mode, a temperature of the refrigerant passing through the outdoor heat exchanger 45 may be lowered as frost sticking grows (or progresses). That is, the temperature of the refrigerant at the inlet of the compressor 100 may also be lowered as frost sticking grows (see FIG. 15).

Therefore, the compressor inlet temperature may be used as a determination factor for accurately determining whether frost sticking occurs.

In step S160, the heat pump 1 may determine whether the first operation time which is the initial start-up time for operating in the heating mode has elapsed (S1611).

The first operation time may be defined as a minimum continuous operation time of the heating mode in order to avoid overshoot.

Here, the minimum of the minimum continuous operation time refers to a conservative range, which means that a lapse of the time is a condition of the occurrence of frost sticking.

That is, when the first operation time has elapsed, in the outdoor heat exchanger 45, frost sticking may occur at a specific outdoor temperature and a corresponding compressor inlet temperature at the outdoor heat exchanger 45.

Therefore, when the first operation time elapses, whether frost sticking occurs may be determined based on the specific outdoor temperature and the corresponding compressor inlet temperature as a criterion ("first criterion").

That is, the first operation time may be defined as the minimum continuous operation time of the heating mode for which frost sticking occurs at the specific outdoor temperature and the corresponding compressor inlet temperature. For example, the first operation time may be set to 10 to 15 minutes.

The memory 310 may store information on the first operation time in advance.

As described above in step S130, the controller 300 may detect a time of operating in the heating mode by the timer 320.

The controller 300 may determine whether the first operation time has elapsed based on the detection information of the timer 320.

If it is determined that the first operation time has elapsed, the heat pump 1 may determine whether the second operation time has elapsed (S1612).

The second operation time may be defined as a minimum continuous operation time of the heating mode for correcting the specific outdoor temperature at which frost sticking occurs and the compressor inlet temperature corresponding thereto.

That is, the second operation time may be understood as a reference operation time for correcting the specific outdoor temperature and the compressor inlet temperature corresponding thereto.

The heat pump 1 may vary the density of frost (ice) on the surface of the outdoor heat exchanger 45 according to the operation time. Therefore, in an embodiment of the present disclosure, a first operation time, a second operation time, and a third operation time are defined in consideration of the operation time.

The controller 300 may determine whether frost sticking occurs by comparing a detected compressor inlet temperature with the criterion defined by an outdoor temperature and a corresponding compressor inlet temperature at each operation time.

The second operation time may have a minimum continuous operation time longer than the first operation time. For example, the second operation time may be set to 30 minutes.

When the second operation time elapses, a criterion ("second criterion") obtained by correcting the specific outdoor temperature and the compressor inlet temperature corresponding thereto may be applied.

The memory 310 may store information on the second operation time in advance.

The controller 300 may determine whether the second operation time has elapsed based on the detection information of the timer 320.

If it is determined that the second operation time has not elapsed, the heat pump 1 may determine whether the first indicator measured in step S150 satisfies the preset first criterion (S1614).

That is, when the continuous operation time of the heating mode is determined to come between the first operation time and the second operation time, the controller 300 may determine whether the measured first indicator satisfies the first criterion stored in advance in the memory 310.

The first criterion may be defined as a range of the compressor inlet temperature corresponding to an outdoor temperature.

Specifically, the first criterion may be defined such that the compressor inlet temperature is -20°C or lower when the outdoor temperature is 0°C or higher, the compressor inlet temperature is -25°C to -20°C when the outdoor temperature is between -10°C to 0°C, the compressor inlet temperature is -35°C to -25°C when the outdoor temperature is between -15°C to -10°C, and the compressor inlet temperature is -35°C or lower when the outdoor temperature is lower than -15°C.

For example, when the outdoor temperature detected in step S140 is 0°C, the controller 300 may determine whether the measured first indicator satisfies -20°C or lower if the continuous operation time of the heating mode is between the first operation time and the second operation time. Also, the controller 300 may determine that the basic condition is satisfied (S1618) if the measured first indicator is lower than -20°C.

Meanwhile, if it is determined that the second operation time has elapsed, the heat pump 1 may determine whether the third operation time has elapsed (S1613).

The third operation time may be defined as a minimum continuous operation time of the heating mode for correcting the criterion ("second criterion") obtained by correcting the specific outdoor temperature and the compressor inlet temperature corresponding thereto to a wider range. For example, the third operation time may be set to 180 minutes.

The third operation time may have a continuous operation time longer than the second operation time. Accordingly, the third operation time may be understood as a time for urgently entering the defrost mode.

The third operation time may be understood as a reference operation time for correcting the specific outdoor temperature and the corresponding compressor inlet temperature to the widest range.

That is, when the third operation time elapses, frost sticking may occur at an outdoor temperature and a corresponding compressor inlet temperature having a wider range than the second criterion (to be described later).

The memory 310 may store information on the third operation time in advance.

The controller 300 may determine whether the third operation time has elapsed based on the detection information of the timer 320.

If it is determined that the third operation time has not elapsed, the heat pump 1 may determine whether the first indicator measured in step S150 satisfies a preset second criterion (S1615).

That is, if the continuous operation time of the heating mode is determined to come between the second operation time and the third operation time, the controller 300 may determine whether the measured first indicator satisfies the second criterion stored in advance in the memory 310.

The second criterion may be defined as a range of the compressor inlet temperature corresponding to an outdoor temperature.

Specifically, the second criterion may be defined such that the compressor inlet temperature is -15°C or lower when the outdoor temperature is 0°C or higher, the compressor inlet temperature is -23°C to -15°C when the outdoor temperature is -10°C to 0°C, and the compressor inlet temperature is -27°C to -23°C when the outdoor temperature is between -20°C to -10°C.

For example, when the outdoor temperature detected in step S140 is 0°C, the controller 300 may determine whether the measured first indicator satisfies -15°C or lower if the continuous operation time of the heating mode is between the second operation time and the third operation time. Also, the controller may determine that the basic condition is satisfied (S1618) if the measured first indicator is -15°C or lower.

Meanwhile, when it is determined that the third operation time has elapsed, the heat pump 1 may determine whether the outdoor temperature detected in step S140 is between a preset lowest reference temperature and a preset highest reference temperature (S1616).

For example, the lowest reference temperature may be set to -40°C. The highest reference temperature may be set to 25°C.

That is, the controller 300 may determine whether the outdoor temperature detected in the step S140 falls within the range above the lowest reference temperature and below the highest reference temperature.

The memory 310 may store information on the lowest reference temperature and the highest reference temperature in advance.

If it is determined that the detected outdoor temperature has a value between the lowest reference temperature and the highest reference temperature, the heat pump 1 may determine whether the measured first indicator is lower than a predetermined designed temperature (S1617).

The designed temperature may be set to -4°C. In addition, the memory 310 may store information on the designed temperature in advance.

The heat pump 1 may determine that the basic condition is satisfied when the measured first indicator is equal to or lower than the designed temperature (S1618).

Specifically, when the continuous operation time of the heating mode has lapsed the third operation time and the detected outdoor temperature has a value between the lowest reference temperature and the highest reference temperature and if the measured first indicator is equal to or lower than the designed temperature, the controller 300 may determine that the basic condition is satisfied (S1618).

FIG. 11 is a flowchart illustrating a control method for determining whether the second condition satisfies the basic condition according to an embodiment of the present disclosure.

Referring to FIG. 11, the determining of whether each indicator satisfies the basic condition (S160) may include determining whether the second indicator satisfies the basic condition. Here, the second indicator may be understood as a variation of the outlet pressure of the outdoor heat exchanger measured in step S150.

In the heating mode, a pressure of the refrigerant passing through the outdoor heat exchanger 45 may be lowered as frost sticking grows (or progresses). That is, the pressure of the refrigerant detected by the outdoor heat exchange sensor 370 may be lowered as frost sticking grows (see FIGS. 9 and 15).

Therefore, a variation $\Delta Pc$ of the outlet pressure of the outdoor heat exchanger may be used as a determination factor for accurately determining whether frost sticking occurs.

In step S160, the heat pump 1 may determine whether the fourth operation time has elapsed (S1641).

The fourth operation time may be defined as a minimum continuous operation time of the heating mode in which frost sticking may occur based on the outdoor heat exchanger outlet pressure Pc as an indicator. For example, the fourth operation time may be set to 40 minutes.

When the fourth operation time has elapsed, frost sticking may occur at a specific outdoor temperature and a corresponding compressor inlet temperature at the outdoor heat exchanger 45.

Therefore, when the fourth operation time has elapsed, whether frost sticking occurs may be determined based on the specific outdoor temperature and the compressor inlet temperature corresponding thereto.

The memory 310 may store information on the fourth operation time in advance.

As described above in step S130, the controller 300 may detect a time of operating in the heating mode by the timer 320.

The controller 300 may determine whether the fourth operation time has elapsed based on the detection information of the timer 320.

If it is determined that the fourth operation time has elapsed, the heat pump 1 may determine whether the outdoor temperature detected in step S140 is between a preset lowest reference temperature and a preset highest reference temperature (S1642).

The lowest reference temperature and the highest reference temperature may be set to be equal to the lowest reference temperature and the highest reference temperature of the first indicator. For example, the lowest reference temperature may be set to -40°C and the highest reference temperature may be set to 25°C.

That is, the controller 300 may determine whether the outdoor temperature detected in the step S140 falls within a range above the lowest reference temperature and below the highest reference temperature.

If it is determined that the detected outdoor temperature has a value between the lowest reference temperature and the highest reference temperature, the heat pump 1 may determine whether the measured second indicator ΔPc exceeds a preset designed pressure (S1643).

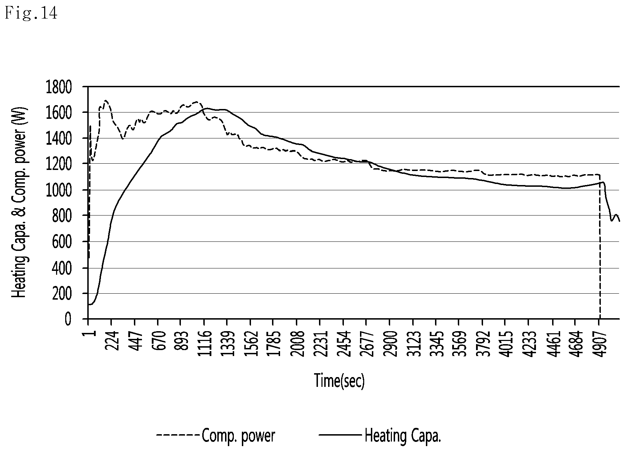

The designed pressure may be set to 70 kPa. The designed pressure will be described later with reference to FIGS. 14 and 15.

The memory 310 may store information on the designed pressure in advance.

In addition, when it is determined that the measured second indicator ΔPc exceeds the designed pressure, the heat pump 1 may determine that the basic condition is satisfied (S1644).

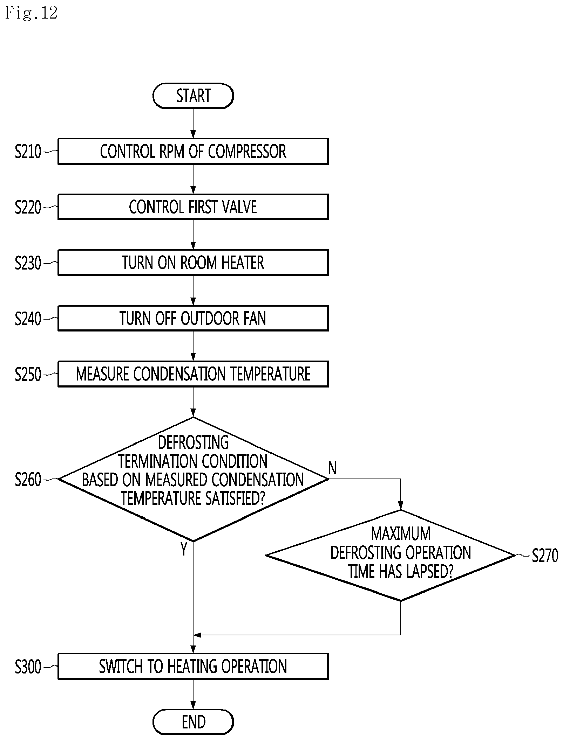

FIG. 12 is a flowchart illustrating a control method of a defrost mode according to an embodiment of the present disclosure. The control method for terminating the defrost mode according to an embodiment of the present disclosure will be described with reference to FIG. 12.

When the defrost mode is entered (S200), the heat pump 1 may control a revolution per minute (RPM) of the compressor 100 (S210).

Specifically, the controller 300 may control to increase the RPM of the compressor 100 in stages.

For example, the controller 300 may operate for 1 minute by increasing the RPM to 3600 RPM after 5 seconds from the defrost mode entry time. In addition, the controller 300 may perform time control by increasing the RPM to a target RPM 1 minute later.

increase the target rotational speed after one minute to perform a regular operation.

In addition, the heat pump 1 may perform a first valve control to match a plurality of valve positions to the defrost mode (S220).

Specifically, the controller 300 may control to adjust the plurality of valve positions to the defrost mode in the heating mode. For example, the controller 200 may control the four-way valve 110 so that a flow direction of the refrigerant is changed, control the outdoor expansion valve 151, the waste heat expansion valve 161, the cooler expansion valve 156, and the chiller valve 164, and control the indoor expansion valve 135 to be opened.

Here, the controller 300 may control to open the opening of the indoor expansion valve 135 in stages.

In addition, the heat pump 1 may operate the room heater 60 to maintain the heating of the room (ON) (S230).

Specifically, the controller 300 may operate the heater pump 61 to operate the room heater 60 so that the coolant may circulate through the heater 63.

In addition, the heat pump 1 may turn off the outdoor fan 46 to maximize a heat transfer effect between frost and the compressed refrigerant.

As described above, in order to avoid convective heat transfer due to the operation of the outdoor fan 46, the controller 300 may control the outdoor fan 46 to be turned off.

According to steps S210 to S240 described above, defrosting may be performed to remove frost stuck to the surface of the outdoor heat exchanger 45.

The heat pump 1 may measure a condensation temperature of the refrigerant and determine whether a defrosting termination condition is satisfied (S260).

Specifically, the refrigerant sensor PT may further include a condensation temperature sensor (not shown) installed at the outdoor pipe 115.

The condensation temperature sensor may be installed on the opposite side to the outdoor heat exchange sensor 370. The condensation temperature sensor may detect a temperature of the refrigerant passing through the outdoor heat exchanger 45 in the defrost mode and provide the detected temperature to the controller 300.

That is, the controller 300 may measure the condensation temperature of the refrigerant based on the detection information provided from the condensation temperature sensor.

The defrost termination condition may be set based on the condensation temperature. The defrosting termination condition may be previously stored in the memory 310.

For example, the defrost termination condition may be defined to be satisfied when the condensation temperature exceeds 40°C. That is, the controller 300 may control to immediately terminate the defrost mode when it is determined that the measured condensation temperature exceeds 40°C.

As another example, the defrost termination condition may be defined to be satisfied when the condensation temperature exceeds 15°C. In this case, however, it may be defined that the defrost mode is terminated after maintained for 30 seconds. That is, if it is determined that the measured condensation temperature exceeds 15°C, the controller 300 may control to hold 30 seconds longer and then terminate the defrost mode. When the condensation temperature is lowered in the defrosting termination condition, the defrost mode holding time may increase.

If it is determined that the measured condensation temperature satisfies the defrost termination condition, the heat pump 1 may terminate the defrost mode and perform a heating operation switching step (S300) to operate in the heating mode (S300).

That is, when the defrosting termination condition is satisfied, the controller 300 may terminate the defrost mode and control the valve position to switch to the heating mode.

Meanwhile, if it is determined that the measured condensation temperature does not satisfy the defrost termination condition, the heat pump 1 may determine whether a preset maximum defrost mode operation time has elapsed (S270).

The maximum defrost mode operation time may be set based on a time point at which the coefficient of performance (COP) drops sharply. For example, the maximum defrost mode operation time may be set to 7 minutes. Information on the maximum defrost mode operation time may be stored in the memory 310 in advance.

Therefore, since an operation exceeding the maximum defrost mode operation time adversely affects the performance of the heat pump 1, the heat pump 1 may terminate the defrost mode when it is determined that the maximum defrost mode operation has lapsed.

In other words, when it is determined that the maximum defrost mode operation time has elapsed, the controller 300 may terminate the defrost mode and perform the heating operation switching step (S300).

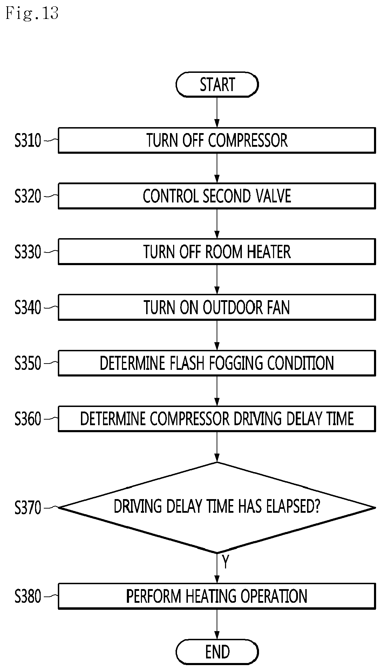

FIG. 13 is a flowchart specifically showing the heating operation switching step (S300) of FIG. 12. A control method for preventing flash fogging will be described with reference to FIG. 13.

As described above, rapid switching from the dehumidification mode to the heating mode may cause a flash fogging phenomenon in which frost melts, condensed water suddenly evaporates to form frost on the front windshield of the indoor area. Therefore, the flash fogging interferes the drive's vision to degrade safety.

In order to prevent this, the heating operation switching step (S300) may include turning off the compressor 100 (S310).

Specifically, the controller 300 may turn off the compressor 100 to initialize the start of the compressor 100 to switch to the heating mode.

OFF of the compressor 100 may be maintained according to a driving delay time (to be described later). That is, the operation of the compressor 100 may be delayed by the driving delay time.

In addition, the heating operation switching step (S300) may further include a second valve control step (S320).

Specifically, the controller 300 may maintain closing of the outdoor expansion valve 118 for the initial start of the heating mode, and perform second valve control to gradually reduce the opening of the indoor expansion valve 135.

The second valve control may open the outdoor expansion valve 118 when the indoor expansion valve 135 is fully closed.

Accordingly, it is possible to prevent sudden switching of the valve position from the defrost mode to the heating mode.

In addition, the heating operation switching step (S300) may further include turning off a room heater (S330).

Specifically, the controller 300 may turn off the room heater 60 operated to maintain the indoor heating in the defrost mode. Accordingly, unnecessary power consumption may be prevented.

In addition, the heating operation switching step (S300) may further include turning on an outdoor fan (S340).

Specifically, the controller 300 may turn on again the outdoor fan 46 that was turned off for effective defrosting.

In addition, the heating operation switching step (S300) may further include determining a flash fogging condition (S350).

The flash fogging condition may be stored in advance in the memory 310.

The flash fogging condition may be determined based on the outdoor temperature detected by the outdoor temperature sensor 330. For example, the flash fogging condition may be set to 5°C as a reference temperature condition.

The heating operation switching step (S300) may further include determining a driving delay time to determine a driving delay time of the compressor according to the flash fogging condition (S360).

The driving delay time according to the flash fogging condition may be stored in advance in the memory 310.

Specifically, the controller 300 may determine the driving delay time to 10 minutes if the detected outdoor temperature is higher than 5°C. Therefore, the controller 300 may maintain the OFF state of the compressor 100 for 10 minutes.

In addition, the controller 300 may determine the driving delay time to 1 minute if the detected outdoor temperature is lower than 5°C. Therefore, the controller 300 may maintain the OFF state of the compressor 100 for 1 minute.

According to the driving delay time, a time required for switching from the defrost mode to the heating mode may be delayed, thereby preventing flash fogging.

The heating operation switching step (S300) may further include determining whether the determined driving delay time has elapsed (S370).

The controller 300 may determine whether the determined driving delay time has elapsed using time detection information transmitted through the timer 320.

If it is determined that the determined driving delay time has elapsed, the controller 300 may start the operation in the heating mode (S380).

That is, the controller 300 may control all the valve positions according to the heating mode, and when the driving delay time elapses, the compressor 100 may start (ON) to operate in the heating mode. For example, the controller 300 may return to step S10 described above when the determined driving delay time elapses.

Therefore, since the operation of the heat pump 1 is not suddenly switched from the defrost mode to the heating mode, flash fogging may be prevented and safety of the electric vehicle may be improved.

FIG. 14 is an experimental graph showing a change in heating capacity due to frost sticking of a heat pump system for an electric vehicle according to an embodiment of the present disclosure, and FIG. 15 is an experimental graph showing a change in evaporator outlet pressure Pevapout due to frost sticking of a heat pump system for an electric vehicle according to an embodiment of the present disclosure.

Referring to FIG. 14, heating capacity continues to increase immediately after the heat pump 1 starts to operate in the heating mode and then start to decrease from about 1,200 (sec) at which the heating capacity is the highest, due to occurrence and growth of frost sticking.

In FIG. 14, the dotted line shows power Comp.power of the compressor 100 operated in the heating mode.

Referring to FIGS. 14 and 15, it can be seen that an evaporator outlet pressure Pevapout detected by the outdoor heat exchange sensor 370 at about 1,200 sec when the heating capacity is the highest is about 188 kPa, which is constantly maintained and then reduced according to a reduction in the heating capacity.

Also it can be seen that the evaporator outlet pressure Pevapout is constantly maintained at about 114 kPa from a time point (about 2,700 sec) at which the slope of the decrease in the heating capacity becomes gradual.

The time point at which the decreased slope becomes gradual may be understood as a case where the growth frost sticking is maximized.

Accordingly, the designed pressure of the second indicator described above in FIG. 11 may be set to 60 to 80 kPa which is a difference between the evaporator outlet pressure Pevapout when the heating capacity is the highest and the evaporator outlet pressure Pevapout at the time point at which the decreased slope of the heating capacity becomes gradual. That is, the designed pressure of the second indicator may be preferably set to 70 kPa.

Therefore, if the second indicator is larger than the designed pressure, a possibility of the occurrence of frost sticking is very high, and thus, the reliability of the determination of frost sticking may be improved.

In addition, referring to FIG. 15, it can be seen that an intake temperature Ts and an intake pressure Ps of the compressor 100 have a similar trend according to the change of the evaporator outlet pressure Evapout due to the influence of the frost sticking.

Therefore, if frost sticking occurs, the work of the compressor 100 may be further increased to maintain a discharge temperature Td of the compressor 100 within a certain range, increasing power consumption. As a result, accurate determination of frost sticking and defrost mode operation may minimize power consumption and improve a driving distance of the electric vehicle per charge of the battery 20.

Meanwhile, FIGS. 14 and 15 are based on experimental conditions in which the outdoor temperature is set to -5°C to 2°C.

It will be apparent to those skilled in the art that various modifications and variations may be made in the present disclosure without departing from the spirit or scope of the disclosures. Thus, it is intended that the present disclosure covers the modifications and variations of this disclosure provided they come within the scope of the appended claims and their equivalents.

**Claims**

1. A method of controlling a heat pump system for an electric vehicle by a controller, the method comprising:

   comparing a temperature of a coolant with a coolant reference temperature defined as a time point at which a viscous force of the coolant changes to determine a waste heat recovery condition;
   determining whether an operation is stopped to determine whether a defrosting mode is stopped in an immediately previous operation of the electric vehicle;
   detecting a continuous operation time of a heating mode;
   detecting an outdoor temperature; and
   measuring a first indicator and a second indicator for determining whether frosting occurs on an outdoor heat exchanger based on the continuous operation time of the heating mode and the outdoor temperature.

2. The method of claim 1, wherein whether the frosting occurring on the outdoor heat exchanger is not determined when the waste heat recovery condition is satisfied.

3. The method of claim 1 or 2, further comprising:

   operating the heat pump system in a waste heat recovery mode in which heat generated by an electric component of the electric vehicle is used as a heat source of refrigerant evaporation when the temperature of the coolant is higher than the coolant reference temperature, and
   operating the heat pump system in a general heating mode in which ambient air is used as a heat source of refrigerant evaporation when the temperature of the coolant is lower than the coolant reference temperature.

4. The method of any one of claims 1 to 3, wherein the determining of whether the operation is stopped further comprises omitting detection of the continuous operation time when the operation is stopped.

5. The method of any one of claims 1 to 4, further comprising:

   determining whether the measured first indicator and the measured second indicator each satisfy a basic condition;
   determining whether a duration time of at least one indicator satisfying the basic condition, among the first indicator and the second indicator, satisfies a duration time condition; and determining that frosting occurs and performing a defrosting mode operation when the duration time of the indicator satisfies the duration time condition.

6. The method of claim 5, wherein
the first indicator comprises a compressor inlet temperature defined as a temperature of a refrigerant intaken to a compressor, and
the basic condition of the first indicator comprises a minimum continuous operation time condition of the heating mode, an outdoor temperature condition, and a condition of the compressor inlet temperature corresponding to the outdoor temperature condition.

7. The method of claim 6, wherein
the minimum continuous operation time condition of the heating mode comprises:

a first operation time for avoiding an overshoot of initial actuation; and
a second operation time for correcting the outdoor temperature condition and the condition of the compressor inlet temperature corresponding to the outdoor temperature condition, the second operation time arriving after a lapse of the first operation time.

8. The method of any one of claims 5 to 7, wherein the second indicator comprises an outdoor heat exchanger outlet pressure defined as a pressure of a refrigerant passing through the outdoor heat exchanger, and
the basic condition of the second indicator comprises a minimum continuous operation time condition of the heating mode, an outdoor temperature condition, and an outdoor heat exchanger outlet pressure condition corresponding to the outdoor temperature condition.

9. The method of claim 8, wherein the outdoor heat exchanger outlet pressure condition is defined as whether the measured second indicator is a pressure greater than 70 kPa.

10. The method of any one of the claims 5 to 9, wherein the performing of the defrosting mode operation comprises a heating operation switching process to return to the heating mode when a defrosting termination condition defined based on a condensation temperature of a refrigerant is satisfied.

11. The method of claim 10, wherein
the heating operation switching process comprises:

turning off a compressor;
determining whether a fresh fogging condition defined based on an outdoor temperature is satisfied;
determining a driving delay time in which an off state of the compressor is maintained when the fresh fogging condition is satisfied; and
turning on the compressor when the driving delay time has elapsed.

12. The method of any one of claims 1 to 11, wherein the second indicator is defined as an outlet pressure variation of the outdoor heat exchanger, and
the outlet pressure variation of the outdoor heat exchanger is defined as a difference between an average value regarding a pressure of a refrigerant passing through the outdoor heat exchanger and a pressure of the refrigerant passing through the outdoor heat exchanger after a lapse of a predetermined operation time.

13. A heat pump system for an electric vehicle, the heat pump system comprising:

a controller configured to perform the method of any one of claims 1 to 12;
a coolant line through which a coolant circulates to a power train module and a battery;
a refrigerant line through which a refrigerant circulates to a compressor, an indoor heat exchanger, an outdoor heat exchanger, an indoor expansion valve, and an outdoor expansion valve;
an outdoor fan configured to blow air to the outdoor heat exchanger;
a coolant temperature sensor installed at the coolant line and configured to detect a temperature of the coolant circulating in the power train module or the battery;
a compressor inlet sensor installed at an intake side of the compressor and configured to measure the first indicator; and
an outdoor heat exchange sensor installed a side of the outdoor heat exchanger and configured to measure the second indicator.

14. The heat pump system of claim 13, further comprising:
a power train chiller configured to allow the coolant line and the refrigerant line to be heat-exchanged.

15. The heat pump system of claim 13 or 14, further comprising:

a memory configured to store a previous operation record,
wherein whether the operation is stopped is determined based on information stored in the memory.

Fig.1

Fig.2

Fig.3

Fig.4

310          320

| MEMORY | TIMER |

| 350 | COOLANT TEMPERATURE SENSOR | → | | COMPRESSOR | 100 |
| 330 | OUTDOOR TEMPERATURE SENSOR | → | | OUTDOOR EXPANSION VALVE | 118 |
| 340 | INDOOR TEMPERATURE SENSOR | → | CONTROLLER | INDOOR EXPANSION VALVE | 135 |
| 360 | COMPRESSOR INLET SENSOR | → | | FOUR-WAY VALVE | 110 |
| 370 | OUTDOOR HEAT EXCHANGE SENSOR | → | | ROOM HEATER | 60 |
| 39 | INDOOR CONTROLLER | → | | OUTDOOR FAN | 46 |

300

Fig.5

Fig.6

Fig.7

```
                    ┌──────────┐
                    │  START   │
                    └────┬─────┘
                         │
        ┌────────────────────────────────┐
        │     TURN ON HEAT PUMP SYSTEM    │── S1
        └────────────────┬───────────────┘
                         │
        ┌────────────────────────────────┐
        │  INPUT USER SETTING TEMPERATURE │── S2
        └────────────────┬───────────────┘
                         │
        ┌────────────────────────────────┐
        │   CALCULATE TARGET TEMPERATURE  │── S3
        └────────────────┬───────────────┘
                         │
              ◇─────────────────────◇
              │    DETERMINE MODE    │── S4
              ◇─────────────────────◇
                         │          S6
  S5                     │
  ┌──────────────┐  ┌──────────────┐  ┌──────────────┐   S10
  │VENTILATION MODE│ │ COOLING MODE │  │ HEATING MODE │
  └──────────────┘  └──────┬───────┘  └──────────────┘
                         │
                    ┌──────────┐
                    │   END    │
                    └──────────┘
```

Fig.8

S10

```
        ┌─────────┐
        │  START  │
        └────┬────┘
             │              S100
             ▼
        ╱──────────────╲                    ┌──────────────────┐
       ╱ WASTE HEAT      ╲         Y         │ OPERATE WASTE HEAT│
      ╱  RECOVERY         ╲──────────────────│ RECOVERY MODE     │──S105
       ╲ CONDITION        ╱                  └──────────────────┘
        ╲ SATISFIED?     ╱
         ╲──────────────╱
             │ N
             ▼
      ┌────────────────────┐
      │ GENERAL HEATING MODE│──S110
      └─────────┬──────────┘
                │
                ▼
        ╱──────────────╲
   Y   ╱ IGNITION OFF    ╲
  ◄────╱  RECORD EXISTS IN ╲──S120
       ╲ DEFROSTING        ╱
        ╲ OPERATION?      ╱
         ╲──────────────╱
             │ N
             ▼
      ┌────────────────────────┐
      │ DETECT HEATING          │──S130
      │ OPERATION TIME          │
      └─────────┬──────────────┘
                │
                ▼
      ┌────────────────────────┐
      │ DETECT OUTDOOR          │──S140
      │ TEMPERATURE             │
      └─────────┬──────────────┘
                │
                ▼
      ┌────────────────────────┐
      │ MEASURE FIRST INDICATOR │──S150
      │ AND SECOND INDICATOR    │
      └─────────┬──────────────┘
                │
                ▼
        ╱──────────────╲
   N   ╱ EACH INDICATOR  ╲
  ◄────╱  SATISFIES        ╲──S160
       ╲ BASIC CONDITION? ╱
         ╲──────────────╱
             │ Y
             ▼
        ╱──────────────╲
   N   ╱ DURATION TIME   ╲
  ◄────╱  CONDITION        ╲──S170
       ╲ SATISFIED?       ╱
         ╲──────────────╱
             │ Y
             ▼
      ┌────────────────────────┐
      │ FROST STICKING OCCURS   │──S180
      └─────────┬──────────────┘
                │
                ▼
      ┌────────────────────────┐
      │ PERFORM DEFROSTING      │──S200
      │ OPERATION               │
      └─────────┬──────────────┘
                │
                ▼
           ┌─────────┐
           │   END   │
           └─────────┘
```

Fig.9

Fig.10

START

S1611 — FIRST OPERATION TIME HAS ELAPSED?

Y

S1612 — SECOND OPERATION TIME HAS ELAPSED? —N→

Y

S1613 — THIRD OPERATION TIME HAS ELAPSED? —N→

Y

S1614 — MEASURED FIRST INDICATOR SATISFIES FIRST CRITERION?

Y

S1615 — MEASURED FIRST INDICATOR SATISFIES SECOND CRITERION?

Y

S1616 — LOWEST REFERENCE TEMPERATURE ≤ HIGHEST REFERENCE TEMPERATURE?

Y

S1617 — FIRST INDICATOR ≤DESIGNED TEMPERATURE

Y

S1618 — BASIC CONDITION SATISFIED

END

Fig.11

```
                    ( START )
                        |
                        v
S1641 ──<  FOURTH OPERATION TIME?  >
                        | Y
                        v
           LOWEST REFERENCE
S1642 ──< TEMPERATURE≤OUTDOOR TEMPERATURE >
          ≤HIGHEST REFERENCE TEMPERATURE
                TEMPERATURE
                        | Y
                        v
S1643 ──<  SECOND INDICATOR (△P)  >
                        | Y
                        v
S1644 ──[ BASIC CONDITION SATISFIED ]
                        |
                        v
                    ( END )
```

Fig.12

```
                        ┌──────────┐
                        │  START   │
                        └────┬─────┘
                             │
  S210 ─┤ ┌─────────────────────────────────────┐
         │      CONTROL RPM OF COMPRESSOR        │
         └─────────────────┬───────────────────┘
                           │
  S220 ─┤ ┌─────────────────────────────────────┐
         │         CONTROL FIRST VALVE           │
         └─────────────────┬───────────────────┘
                           │
  S230 ─┤ ┌─────────────────────────────────────┐
         │         TURN ON ROOM HEATER           │
         └─────────────────┬───────────────────┘
                           │
  S240 ─┤ ┌─────────────────────────────────────┐
         │         TURN OFF OUTDOOR FAN          │
         └─────────────────┬───────────────────┘
                           │
  S250 ─┤ ┌─────────────────────────────────────┐
         │   MEASURE CONDENSATION TEMPERATURE    │
         └─────────────────┬───────────────────┘
                           │
```

S260 —  DEFROSTING TERMINATION CONDITION BASED ON MEASURED CONDENSATION TEMPERATURE SATISFIED?   N

Y

MAXIMUM DEFROSTING OPERATION TIME HAS LAPSED?  — S270

```
  S300 ─┤ ┌─────────────────────────────────────┐
         │       SWITCH TO HEATING OPERATION     │
         └─────────────────┬───────────────────┘
                           │
                        ┌──────────┐
                        │   END    │
                        └──────────┘
```

Fig.13

```
                    ( START )
                        │
                        ▼
S310 ─┤     TURN OFF COMPRESSOR          │
                        │
                        ▼
S320 ─┤     CONTROL SECOND VALVE         │
                        │
                        ▼
S330 ─┤     TURN OFF ROOM HEATER         │
                        │
                        ▼
S340 ─┤     TURN ON OUTDOOR FAN          │
                        │
                        ▼
S350 ─┤  DETERMINE FLASH FOGGING CONDITION │
                        │
                        ▼
S360 ─┤ DETERMINE COMPRESSOR DRIVING DELAY TIME │
                        │
                        ▼
S370 ─┤ DRIVING DELAY TIME HAS ELAPSED? │
                        │ Y
                        ▼
S380 ─┤    PERFORM HEATING OPERATION     │
                        │
                        ▼
                    ( END )
```

Fig.14

Fig.15

Europäisches
Patentamt

European
Patent Office

Office européen
des brevets

# EUROPEAN SEARCH REPORT

Application Number

EP 20 16 8036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 237 357 B1 (HIRAO TOYOTAKA [JP] ET AL) 29 May 2001 (2001-05-29) | 1-15 | INV. B60H1/00 B60H1/32 F25B47/02 |
| Y | * column 9 - column 10; claim 4; figure 1 * | 1-15 | |
| Y | US 2013/227973 A1 (KANG SUNGHO [KR] ET AL) 5 September 2013 (2013-09-05) * paragraphs [0101] - [0182]; figures 3-5 * | 1-15 | |
| Y | FR 2 973 482 A1 (VALEO SYSTEMES THERMIQUES [FR]) 5 October 2012 (2012-10-05) * pages 13,18-19; claim 6; figures 1-3 * | 5,6,8,9, 12,13 | |
| Y | FR 3 064 945 A1 (VALEO SYSTEMES THERMIQUES [FR]) 12 October 2018 (2018-10-12) * pages 16-18,30; claims 1,6; figure 1 * | 5,6,8,9, 12 | |
| Y | JP H10 148427 A (DAIKIN IND LTD) 2 June 1998 (1998-06-02) * paragraphs [0030] - [0034] * | 11 | |
| A | EP 2 695 758 A1 (HONDA MOTOR CO LTD [JP]) 12 February 2014 (2014-02-12) * the whole document * | 1-15 | TECHNICAL FIELDS SEARCHED (IPC) B60H F25B |
| A | US 2005/039959 A1 (FRUHAUF FRANK [DE] ET AL) 24 February 2005 (2005-02-24) * the whole document * | 1-15 | |

The present search report has been drawn up for all claims

| Place of search | Date of completion of the search | Examiner |
|---|---|---|
| Munich | 17 September 2020 | Kristensen, Julien |

EPO FORM 1503 03.82 (P04C01)

## ANNEX TO THE EUROPEAN SEARCH REPORT
## ON EUROPEAN PATENT APPLICATION NO.

EP 20 16 8036

This annex lists the patent family members relating to the patent documents cited in  the above-mentioned European search report.
The members are as contained in the European Patent Office EDP file on
The European Patent Office is in no way liable for these particulars which are merely given for the purpose of information.

17-09-2020

| Patent document cited in search report | | Publication date | Patent family member(s) | | | Publication date |
|---|---|---|---|---|---|---|
| US 6237357 | B1 | 29-05-2001 | CN | 1277926 | A | 27-12-2000 |
| | | | CN | 1491820 | A | 28-04-2004 |
| | | | CN | 1491821 | A | 28-04-2004 |
| | | | DE | 60016835 | T2 | 01-12-2005 |
| | | | EP | 1059181 | A2 | 13-12-2000 |
| | | | JP | 4310027 | B2 | 05-08-2009 |
| | | | JP | 2001010334 | A | 16-01-2001 |
| | | | JP | 2009154868 | A | 16-07-2009 |
| | | | KR | 20010007279 | A | 26-01-2001 |
| | | | US | 6237357 | B1 | 29-05-2001 |
| US 2013227973 | A1 | 05-09-2013 | CN | 103363603 | A | 23-10-2013 |
| | | | EP | 2636548 | A1 | 11-09-2013 |
| | | | US | 2013227973 | A1 | 05-09-2013 |
| | | | US | 2016033193 | A1 | 04-02-2016 |
| FR 2973482 | A1 | 05-10-2012 | EP | 2790938 | A1 | 22-10-2014 |
| | | | FR | 2973482 | A1 | 05-10-2012 |
| | | | WO | 2012136379 | A1 | 11-10-2012 |
| FR 3064945 | A1 | 12-10-2018 | CN | 110678342 | A | 10-01-2020 |
| | | | EP | 3606776 | A1 | 12-02-2020 |
| | | | FR | 3064945 | A1 | 12-10-2018 |
| | | | WO | 2018185415 | A1 | 11-10-2018 |
| JP H10148427 | A | 02-06-1998 | NONE | | | |
| EP 2695758 | A1 | 12-02-2014 | CN | 103568782 | A | 12-02-2014 |
| | | | EP | 2695758 | A1 | 12-02-2014 |
| | | | JP | 2014034371 | A | 24-02-2014 |
| | | | US | 2014041404 | A1 | 13-02-2014 |
| US 2005039959 | A1 | 24-02-2005 | DE | 10201741 | A1 | 07-08-2003 |
| | | | EP | 1465784 | A1 | 13-10-2004 |
| | | | JP | 2005514261 | A | 19-05-2005 |
| | | | US | 2005039959 | A1 | 24-02-2005 |
| | | | WO | 03059664 | A1 | 24-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130014535 A

- KR 1020150098167 A